# EUROPEAN PATENT APPLICATION

(11) **EP 4 625 202 A1**
(43) Date of publication of application: **01.10.2025**
(21) Application number: 25163833.4
(22) Date of filing: 14.03.2025
(51) Int. Cl.: G06F 16/3329

(54) **INTELLIGENT SEARCH QUERY INTERPRETATION AND RESPONSE**

(30) Priority: 29.03.2024 US 202418622088
(71) Applicant: Microsoft Technology Licensing, LLC, Redmond, WA 98052 (US)
(72) Inventor: Wang, Xiao, Redmond, WA, 98052 (US); Meng, Sijing, Redmond, WA, 98052 (US); Zhu, Wenxing, Redmond, WA, 98052 (US); Imasogie, Eric, Redmond, WA, 98052 (US); Chen, Junkui, Redmond, WA, 98052 (US); Zhang, Tianqi, Redmond, WA, 98052 (US)
(74) Representative: Grünecker Patent- und Rechtsanwälte PartG mbB

(57) **Abstract**

Systems, methods, devices, and computer readable storage media described herein provide techniques for intelligently interpreting and/or responding to search queries. In an aspect, a search query comprising a search term is received. A generative artificial intelligence (AI) model is utilized to generate a question based on the search term. Data semantically similar to the question is identified. The generative AI model is used to determine an answer to the question based on the question and the identified data. In a further aspect, a question-answer pair comprising the question and answer is generated. In an alternative further aspect, the answer is caused to be presented in a graphic user interface corresponding to a search engine. In a further aspect, the answer is determined during an active session with the search engine. In a further aspect, the search term and the question-answer pair are stored in a key-value store.

## Description

### BACKGROUND

In implementations of search engines, a user may provide broad search terms. For instance, a user's search query may consist of one, two, or three words, a short phrase, or similar terms. Some implementations of search engines provide a large number of search results based on such broad search terms. Some of the search results may not answer a user's question.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments are described herein for intelligently interpreting a search query and responding to the search query. For instance, in an example embodiment, a first search query comprising a first search term is received. A generative artificial intelligence (AI) model (e.g., a large language model (LLM)) is used to generate a question based on the first search term. Data semantically similar to the question is identified. The generative AI model is used to determine an answer to the question based on the question and the identified data. A question-answer pair comprising the question and the answer is generated. In an alternative (or additional) embodiment, the answer is caused to be presented in a graphic user interface (GUI) corresponding to a search engine.

In a further embodiment, the question-answer pair is stored in a database.

In a further embodiment, the search term is stored as a key in a key-value store and the question-answer pair is stored as a value in the key-value store.

In a further embodiment, the question-answer pair (or the answer) is provided to a search engine (or corresponding GUI) responsive to the search engine receiving a second search query comprising a second search term semantically similar to the first search term.

In a further embodiment, the question-answer pair is generated during an active session with a search engine.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of a system for intelligent search query interpretation and response, in accordance with an example embodiment.
FIG. 2 shows a block diagram of a system for generating a question-answer pair, in accordance with an example embodiment.
FIG. 3 shows a flowchart of a process for generating a question-answer pair, in accordance with an example embodiment.
FIG. 4 shows a flowchart of a process for storing a question-answer pair, in accordance with an example embodiment.
FIG. 5 shows a flowchart of a process for providing a question-answer pair to a search engine system, in accordance with an example embodiment.
FIG. 6 shows a flowchart of a process for prompting a generative AI model to generate a question, in accordance with an example embodiment.
FIG. 7 shows a block diagram of a system for identifying data semantically similar to the question, in accordance with an example embodiment.
FIG. 8 shows a flowchart of a process for identifying data semantically similar to the question, in accordance with an example embodiment.
FIG. 9 shows a block diagram of a system for causing a response to a search query to be presented in a graphic user interface, in accordance with an example embodiment.
FIG. 10 shows a flowchart of a process for causing a response to a search query to be presented in a graphic user interface, in accordance with an example embodiment.
FIG. 11 shows a flowchart of a process for determining a question and answer from a search term during an active session of a search engine, in accordance with an example embodiment.
FIG. 12 depicts an example user interface of a web browser depicting a direct search result, in accordance with an example embodiment.
FIG. 13 shows a block diagram of an example computing environment in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Embodiments for Search Query Interpretation and Response

Search engines are utilized in various ways to determine search results from a search query. In implementations of search engines, a search query is a broad query (e.g., a query comprising few words (e.g., one word, two words, three words, and/or the like), a query comprising a short phrase, and/or the like) or a detailed query (e.g., a query comprising a complete question, a query comprising many words, and/or the like). In situations where a user provides a broad query, some implementations of search engines provide a large number of search results (e.g., hundreds, thousands, or even greater numbers). Results within the large number of search results may or may not directly answer the user's intended query. For instance, suppose a user is trying to learn about a technical concept, e.g., "linear regression." In this example, the user enters "linear regression" as a search term into a search engine and the search engine provides a large (e.g., an overwhelming) amount of results, some of which do not directly answer the question. Combing through the search results in order to locate the correct answer can be time consuming, if the right answer is even provided.

As an alternative to submitting a broad query, in some implementations, a user formulates a detailed query comprising many search terms (and potentially search operators (e.g., special commands and/or characters that filter search results)) in an attempt to improve the returned search results. This technique requires additional resources expended on the user-side (e.g., additional time formulating a query, additional keystrokes, additional knowledge of search operators).

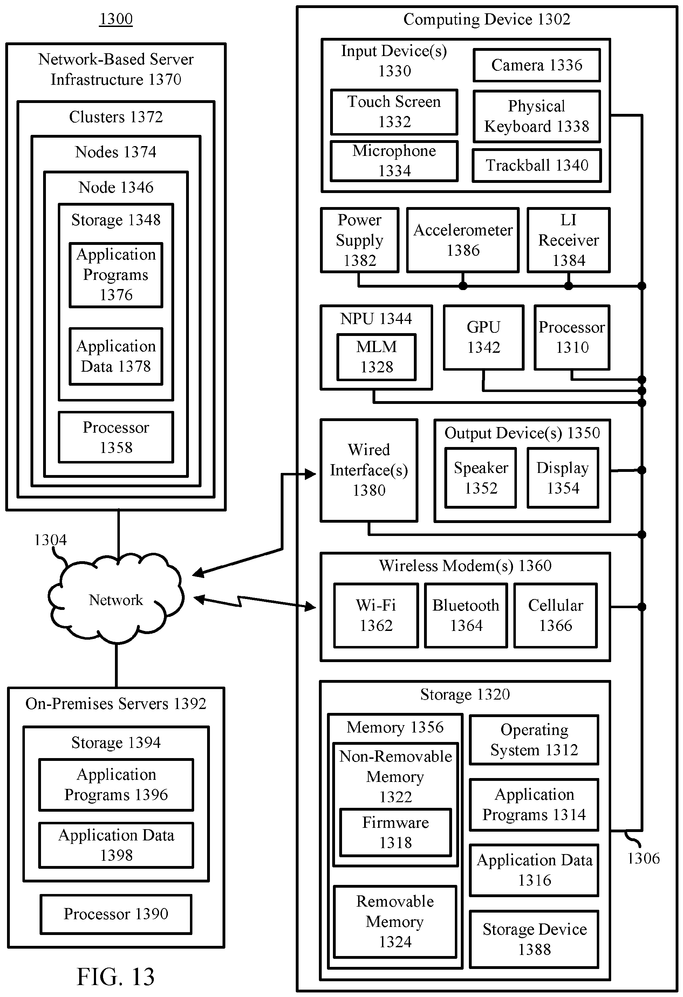

Embodiments of the present disclosure leverage a generative artificial intelligence (AI) model to improve search query interpretation and response. A generative AI model is a model that generates content that is complex, coherent, and/or original. For instance, a generative AI model can create sophisticated sentences, lists, ranges, tables of data, images, essays, and/or the like. An example of a generative AI model is a language model. For instance, a large language model (LLM) is leveraged by some embodiments described herein. An LLM is a language model that has a high number of model parameters (e.g., weights and biases the model learns during training). An LLM is (pre-)trained using self-supervised learning and/or semi-supervised learning. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks). Additional details regarding transformer-based LLMs (and generative AI models in general) are described with respect to FIG. 13, as well as elsewhere herein.

In an aspect of the present disclosure, methods, systems, and computer-readable storage media described herein generate questions and answers from search queries using a generative AI model. For example, in an embodiment, a search query comprising a search term is received. A generative AI model (e.g., an LLM) is used to generate a question based on the search term. In some implementations, a question prompt is provided to the generative AI model to cause it to generate the question. In examples, the question prompt comprises the search term and (e.g., optionally) additional context associated with the search term (e.g., an organization corresponding to a domain of the search engine, a product associated with the organization, a product associated with a keyword in the search term, a service (or subscription thereto) associated with the organization or keyword, click through data associated with the search query, and/or any other additional context associated with the search term). Data semantically similar to the question is identified, and a generative AI model (e.g., the same generative AI model or another generative AI model) is utilized to determine an answer to the question based on the question and the identified data. In examples, a question-answer pair comprising the question and answer is generated and/or the question and the answer are (e.g., caused to be) presented in a graphic user interface (GUI) (e.g., a GUI displayed by a computing device that provided the search query).

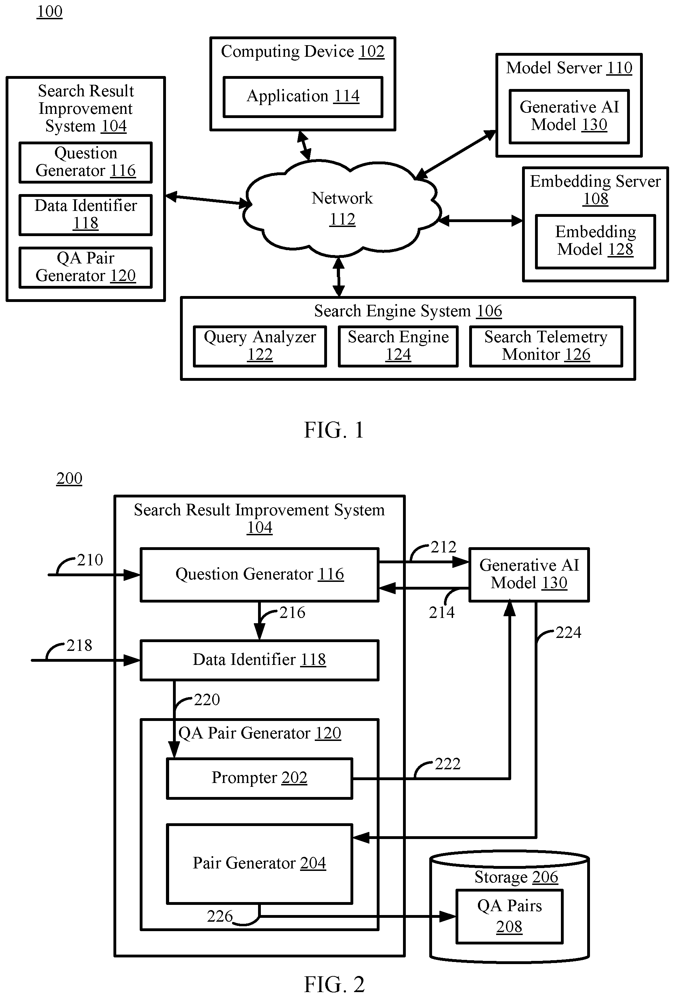

In examples, systems, devices, and apparatuses are configured in various ways for intelligent search interpretation and response. For example, FIG. 1 shows a block diagram of a system 100 for intelligent search query interpretation and response, in accordance with an example embodiment. System 100 comprises a computing device 102, a search result improvement (SRI) system 104, a search engine system 106, an embedding server 108, and a model server 110. Computing device 102, SRI system 104, search engine system 106, embedding server 108, and model server 110 are communicatively coupled via network 112. In examples, network 112 comprises one or more networks such as local area networks (LANs), wide area networks (WANs), enterprise networks, the Internet, etc. In examples, network 112 comprises one or more wired and/or wireless portions. The features of system 100 are described in detail as follows.

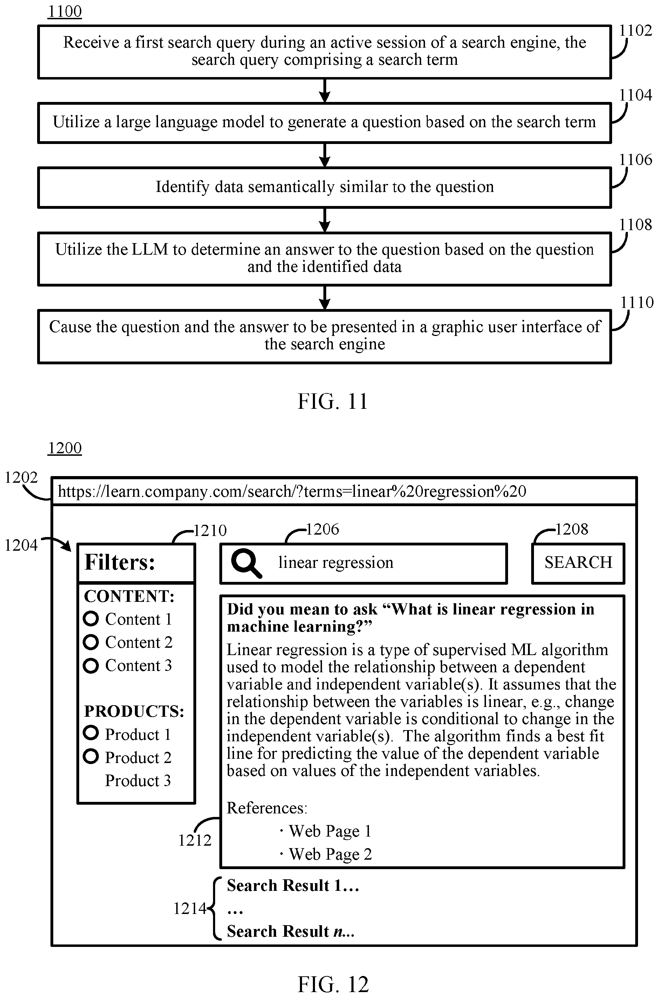

In examples, computing device 102 is any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, computing device 102 is associated with a user (e.g., an individual user, a group of users, an organization, a family user, a customer user, an employee user, an admin user (e.g., a service team user, a developer user, a management user, etc.), etc.). As shown in FIG. 1, computing device 102 is configured to execute an application 114. In accordance with an embodiment, application 114 enables a user to interface with SRI system 104, search engine system 106, embedding server 108, and/or model server 110. For example, in a non-limiting example, application 114 comprises a search window or search application that enables a user to submit a search query to be transmitted to SRI system 104 and/or search engine system 106. In this example, application 114 receives responses to the search query from SRI system 104 and/or search engine system 106, as described elsewhere herein. In accordance with an embodiment, application 114 displays information included in the response (e.g., a question corresponding to the search query, an answer to the question, search results corresponding to the search query, etc.) in a graphic user interface (GUI), not shown in FIG. 1. An example of a GUI is described with respect to FIG. 12, as well as elsewhere herein.

Model server 110 and embedding server 108 are network-accessible servers (or other types of computing devices). In accordance with an embodiment, one or both of embedding server 108 and/or model server 110 are incorporated in a network-accessible server set (e.g., a cloud-based environment, an enterprise network server set, and/or the like). Furthermore, as shown in FIG. 1, each of embedding server 108 and model server 110 are a single server or other computing device. In an alternative example embodiment, either of embedding server 108 and/or model server 110 are implemented across multiple servers or computing devices (e.g., as a distributed server). In accordance with another alternative example embodiment, embedding server 108 and/or model server 110 are incorporated in the same server. Each of embedding server 108 and model server 110 are configured to execute services and/or store data. For instance, as shown in FIG. 1, embedding server 108 is configured to execute and/or store an embedding model 128 and model server 110 is configured to execute and/or store a generative AI model 130. In accordance with an embodiment, application 114 interfaces with embedding model 128 and/or generative AI model 130 over network 112.

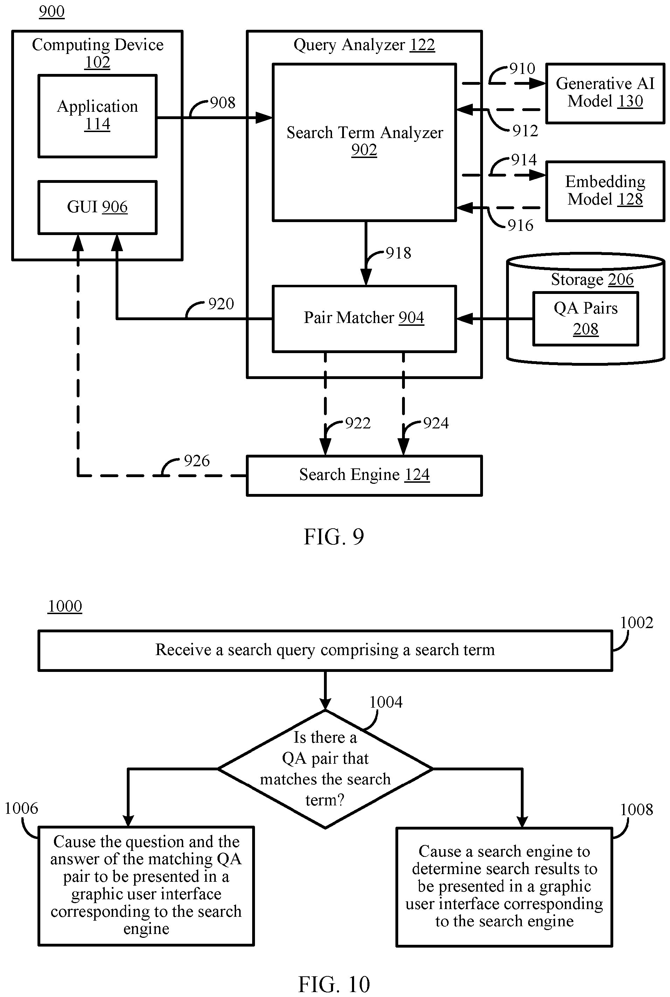

Search engine system 106 is configured to generate search results in response to a search query. In accordance with an embodiment, search engine system 106 comprises one or more servers and/or computing devices configured to execute program instructions to generate search results in response to a search query. As shown in FIG. 1, search engine system 106 comprises a query analyzer 122, a search engine 124, and a search telemetry monitor 126, each of which are services executed by or sub-components of search engine system 106. In an alternative embodiment, one or more of query analyzer 122, search engine 124, and/or search telemetry monitor 126 are incorporated in another component of system 100 (e.g., as a sub-service/component of SRI system 104, as part of application 114, etc.). Query analyzer 122 comprises logic for receiving search queries, analyzing search terms included in search queries, determining if a search term matches an answer generated by SRI system 104 (as described elsewhere herein), causing responses to a search query to be presented in a GUI of application 114 (or computing device 102), and/or performing any other operations with respect to analyzing a search query submitted to search engine system 106. Additional details regarding query analyzer 122 are described with respect to FIGS. 9 and 10, as well as elsewhere herein.

Search engine 124 comprises logic for determining search results in response to a search query. In accordance with an embodiment, search engine 124 determines hyperlinks to web pages and/or other relevant information to present in a GUI in response to a search query. In some implementations, results are limited to a specific type (e.g., images, videos, news, etc.). In accordance with an embodiment, search engine 124 utilizes an index of web pages that are updated via web crawlers. In accordance with an embodiment, search engine 124 is a search engine that searches (e.g., the entirety of) the World Wide Web. In accordance with an alternative embodiment, search engine 124 is a search engine that searches web pages and/or other information with respect to a particular domain or organization (e.g., a search engine for a retailer's website, a search engine for information on a company website, a search engine for a school website, and/or any other type of search engine specific to a particular domain and/or organization). In accordance with an embodiment, a front-end of search engine 124 is displayed by application 114 (or another component/service of computing device 102, not shown in FIG. 1). For instance, in a non-limiting example suppose application 114 is a web-browsing application (a "web browser") that is navigated to a webpage of search engine system 106. In this context, application 114 displays (e.g., in a GUI of application 114) a front-end of search engine 124. A non-limiting example of a webpage including a window corresponding to search engine 124 (and search engine system 106 in general) is further described with respect to FIG. 12.

Search telemetry monitor 126 comprises logic for monitoring searches executed by search engine 124. In accordance with an embodiment, search telemetry monitor 126 stores data corresponding to executed searches in a data repository, not shown in FIG. 1. In some embodiments, search telemetry monitor 126 tracks executed searches on a (e.g., rolling) basis (e.g., the last week of searches, the last month of searches, the last 30 days of searches, the last year of searches, and/or any other magnitude of period of time of searches). Information captured by search telemetry monitor 126 includes, but is not limited to, search terms in a submitted query, the length of a submitted query (e.g., character length, word length, etc.), a time the search query was received by search engine system 106, a filter applied to the search query that filtered search results based on filter criteria (e.g., by content type, by related products or services, by price, by brand, by publish date of the webpage/content, by last updated date of the webpage/content, and/or any other criteria suitable for filtering search results), click-through data associated with a session in which the search query was submitted (e.g., the webpage displayed in a web browser when the search query was submitted, a previous webpage visited in the web browser, a search results selected after search results were presented, and/or any other data associated with previous or future navigations in a web browser or other application associated with the search query.

SRI system 104 is configured to (e.g., attempt to) improve search results generated by search engine system 106. In accordance with an embodiment, SRI system 104 comprises one or more servers and/or computing devices configured to execute program instructions to generate questions based on telemetry, identify data based on questions, generate answers based on questions and identified data, generate question-answer pairs (also referred to as "QA pairs" herein), and/or perform any other operations associated with attempts to improve search results and/or provide direct answer to a search query described herein and/or as would otherwise be understood by a person ordinarily skilled in the relevant art(s) having benefit of the present disclosure. As shown in FIG. 1, SRI system 104 comprises a question generator 116, a data identifier 118, and a question-answer pair generator 120 ("QA pair generator 120"), each of which are services executed by or sub-components of SRI system 104. In an alternative embodiment, one or more of question generator 116, data identifier 118, and/or QA pair generator 120 are incorporated in another component of system 100 (e.g., as a sub-service/component of search engine system 106, as part of application 114, etc.).

Question generator 116 comprises logic for receiving a search query comprising a search term (or alternatively, receiving a search term from a search query received by search engine system 106), interfacing with generative AI model 130, generating questions based on telemetry, and/or performing any other operations regarding generation of questions based on search terms as described elsewhere herein. In accordance with an embodiment, question generator 116 generates a prompt that causes generative AI model 130 to generate a question (also referred to as an "inferred question" herein) based on a search term and (optionally) additional context. In accordance with an embodiment, question generator 116 validates questions received from generative AI model 130. Additional details regarding question generator 116 are described with respect to FIGS. 2, 3, 6, and 11, as well as elsewhere herein.

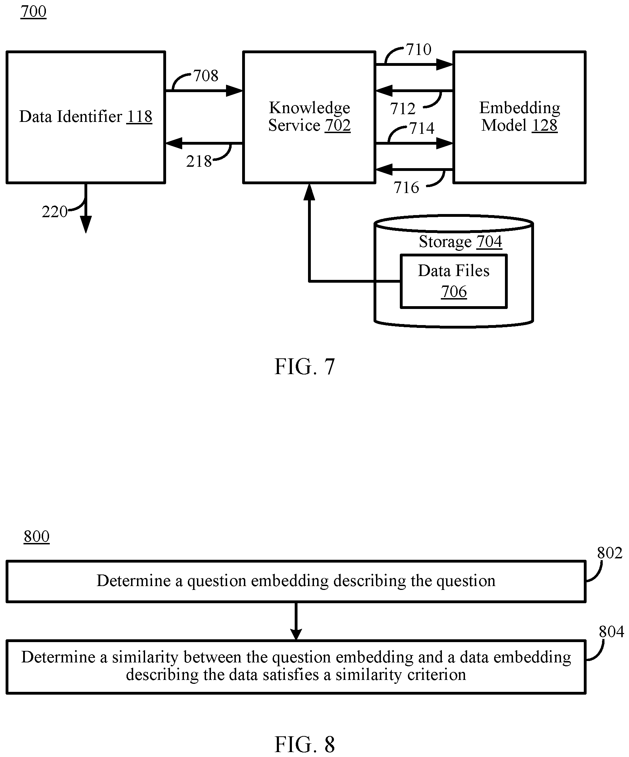

Data identifier 118 comprises logic for identifying data similar to a question, interfacing with a database or other service that oversees data files, interfacing with an embedding model, determining similarity between data and questions, and/or performing any other operation regarding identifying data similar to a question as described elsewhere herein. In accordance with an embodiment, data identifier 118 manages and/or otherwise oversees data. Alternatively (e.g., as described with respect to FIGS. 7 and 8), data identifier 118 interfaces with an external service that manages and oversees data (also referred to as a "knowledge service" herein). In examples, data identifier 118 identifies data based on keyword matching, text matching, semantic meaning matching (e.g., using embeddings from embedding model 128), and/or another means for identifying data similar to text. Additional details regarding data identifier 118 are described with respect to FIGS. 2, 3, 7, 8, and 13, as well as elsewhere herein.

QA pair generator 120 comprises logic for determining an answer based on a question (and associated/identified data), prompting generative AI model 130 to determine an answer, generating a QA pair based on a question and an answer, storing a QA pair in a data store, causing a question, answer, or QA pair to be presented in a GUI, and/or performing any other operation regarding generation and/or use of question-answer pairs and/or answers, as described elsewhere herein. In implementations, QA pair generator 120 leverages generative AI model 130 and identified data to generate an answer (also referred to as a "direct answer") to a question generated by question generator 116. The direct answer represents SRI system 104's attempt to provide an (e.g., straightforward) answer to a question inferred from a search query. In accordance with an embodiment, QA pair generator 120 generates QA pairs independent of a search query presently received by search engine system 106. For instance, in some implementations QA pair generator 120 generates a QA pair "offline", or prior to (or otherwise independent of) search engine system 106 receiving a new search query. Additional details regarding offline operation of QA pair generator 120 (and offline operation of SRI system 104 in general) are described in Section IV, as well as elsewhere herein. Alternatively (or additionally), QA pair generator 120 generates a QA pair "online" or subsequent to a search query submitted by a user (e.g., in real time). Additional details regarding online operation of QA pair generator 120 (and online operation of SRI system 104 in general) are described in Section V, as well as elsewhere herein.

In some examples, one or more components of SRI system 104 and search engine system 106 are integrated into a single system and/or service. For instance, in a non-limiting example, question generator 116, data identifier 118, QA pair generator 120, query analyzer 122 and search engine 124 are integrated into an "intelligent search system."

Embedding model 128 is a model configured to generate embeddings for use in machine learning. The embeddings generated by embedding model 128 are information dense representations of semantic meaning of an input (e.g., a piece of text). For instance, in accordance with an embodiment, an embedding is a vector of floating-point numbers such that the distance between two embeddings in vector space is correlated with semantic similarity between two inputs in their original format (e.g., text format). As an example, if two texts are similar, their vector representations should also be similar. In this manner, embeddings generated by embedding model 128 provide representation of data usable by systems described herein for performing various functions associated with data represented by embeddings. For instance, data identifier 118 in accordance with an embodiment utilizes embeddings to improve identification of data semantically similar to a search term or question, e.g., as described with respect to FIGS. 7 and 8, as well as elsewhere herein. In another example embodiment, query analyzer 122 utilizes embeddings to improve generating a response to a search query, e.g., as described with respect to FIGS. 9 and 10, as well as elsewhere herein.

Generative AI model 130 is configured to generate questions and answers based on received input. In examples, generative AI model 130 is any type of generative AI model capable of generating questions and/or answers based on prompts received from SRI system 104. In accordance with an embodiment, generative AI model 130 is an LLM. In an example, generative AI model 130 is trained using public information (e.g., information collected and/or scrubbed from the Internet) and/or data stored by an administrator of model server 110 (e.g., stored in memory of model server 110 and/or memory accessible to model server 110). In accordance with an embodiment, generative AI model 130 is an "off the shelf" model trained to generate complex, coherent, and/or original content based on (e.g., any) prompts. In an alternative embodiment, generative AI model 130 is a specialized model trained to generate questions and/or answers on prompts. Additional details regarding the operation and training of generative AI models such as generative AI model 130 are described with respect to FIG. 13, as well as elsewhere herein.

System 100 has been described with respect to generating QA pairs from search queries and/or generating a response to a search query based on QA pairs. Additional details regarding generating QA pairs utilizing a generative AI model, generating a response to a search query based on generated QA pairs, and generating a response to a search query utilizing a generative AI model are described in the following sections (as well as elsewhere herein).

### III. Embodiments of Search Result Improvement Systems

As described herein, embodiments leverage a generative AI model to improve search query interpretation and response. For instance, an SRI system (such as SRI system 104 of FIG. 1) utilizes a generative AI model to infer a question and further utilizes the generative AI model to determine a direct answer to the inferred question. SRI system 104 is configured in various ways to generate questions and answers, in examples. For instance, FIG. 2 shows a block diagram of a system 200 for generating a question-answer pair, in accordance with an example embodiment. As shown in FIG. 2, system 200 comprises SRI system 104 (comprising question generator 116, data identifier 118, and QA pair generator 120), search telemetry monitor 126, and generative AI model 130, as described with respect to FIG. 1, and a storage 206. As also shown in FIG. 2, QA pair generator 120 comprises a prompter 202 and a pair generator 204. In examples, prompter 202 and pair generator 204 are implemented as sub-services of QA pair generator 120.

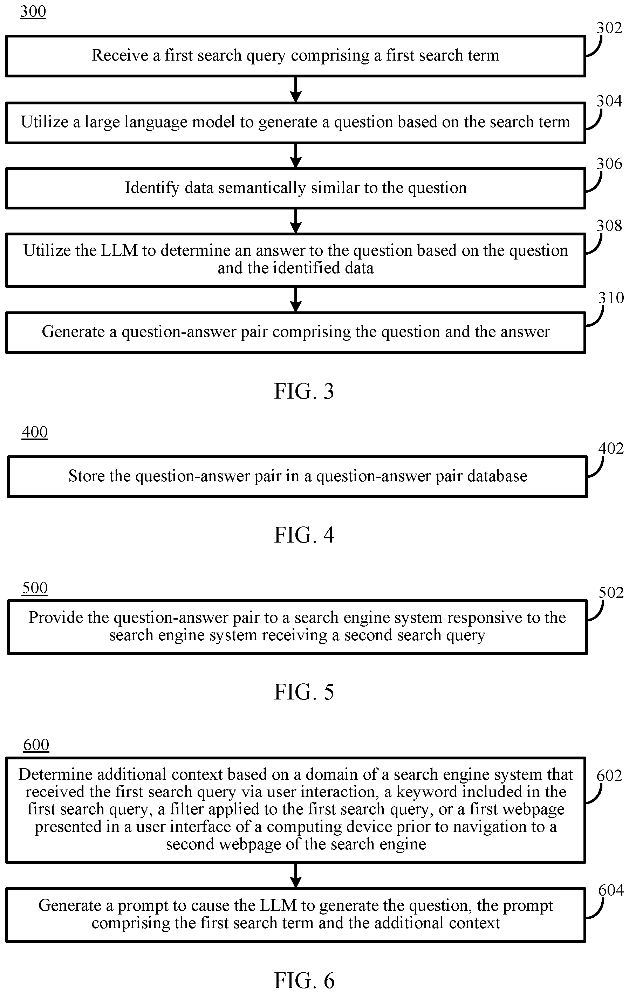

Storage 206 stores data used by and/or generated by computing device 102, SRI system 104, search engine system 106, embedding server 108, and/or model server 110 of FIG. 1. For instance, as shown in FIG. 2, storage 206 stores QA pairs 208. QA pairs 208 comprises paired questions and answers generated by SRI system 104. In particular, each question is a question generated by question generator 116 and each answer is an answer generated by QA pair generator 120 based on a corresponding question. In some examples, storage 206 is a key-value store. For instance, storage 206 in a non-limiting example stores questions as a key and answers as a value. In this context, services and devices are able to determine answers mapped to a question by using the question as a key. In an alternative embodiment, storage 206 stores search terms as keys and QA pairs as corresponding values. In this context, services and devices are able to determine questions and/or answers mapped to search terms by using the search term(s) as a key. Additional details regarding storage of QA pairs are described with respect to FIG. 4, as well as elsewhere herein.

As shown in FIG. 2, storage 206 is external to SRI system 104. In an alternative example embodiment, all or a portion of storage 206 is internal to SRI system 104. In accordance with an embodiment, all or a portion of storage 206 is internal to computing device 102, search engine system 106, embedding server 108, and/or model server 110 of FIG. 1. In accordance with an embodiment, storage 206 is a remote storage accessible over network 112 (e.g., a web storage, a blob storage, a networked file system, a cloud storage, etc.).

To better understand the operation of SRI system 104, FIG. 2 is described with respect to FIG. 3. FIG. 3 shows a flowchart 300 of a process for generating a question-answer pair, in accordance with an example embodiment. In accordance with an embodiment, SRI system 104 of FIG. 2 operates according to flowchart 300. Not all steps of flowchart 300 need be performed in all embodiments. Further structural and operational embodiments will be apparent to persons skilled in the relevant art(s) based on the following descriptions of FIGS. 2 and 3.

Flowchart 300 begins with step 302. In step 302, a first search query comprising a first search term is received. For example, question generator 116 receives a first search query 210 ("query 210" herein) comprising a first search term. In accordance with an embodiment, query 210 is a query submitted during an active session of a search engine received by query analyzer 122 and transmitted to (e.g., redirected to) question generator 116 (e.g., in an "online" implementation). In accordance with another embodiment, query 210 is a query previously received by (and already responded to by) search engine system 106 (e.g., in an "offline" implementation). In examples of the offline implementation, query 210 is received (or otherwise obtained) from search telemetry monitor 126. In examples, the search term within query 210 comprises a single word, a single phrase, a group of words, a number of phrases, and/or the like. In accordance with an embodiment, query 210 indicates a filter applied to the query 210, a domain of the web page query 210 was submitted in, an identifier of the application used to submit query 210, and/or any other information associated with query 210 and/or the transmission thereof.

In some examples, question generator 116 obtains a set of search queries comprising query 210 at a time. For instance, question generator 116 in accordance with an embodiment receives (e.g., all) queries received by search engine system 104 during a period of time (e.g., queries received in the last week, last thirty days, last month, last year, etc.), the last N number of queries received by search engine system 104 (e.g., the last hundred(s) queries, the last thousand(s) queries, etc.), and/or the like. In accordance with an embodiment, question generator 116 (e.g., only) obtains a curated set of queries. Alternatively, question generator 116 comprises logic to filter queries and/or remove information from queries. For instance, in examples, queries comprising certain language or information (e.g., offensive words, personally identifying information, and/or irrelevant information) and/or queries above a certain word or character count are filtered from the set. Alternatively, such language or information is removed from the queries, e.g., in a manner such that a query previously comprising personally identifying information can be evaluated without the personally identifying information.

In step 304, an LLM is utilized to generate a question based on the search term. For example, question generator 116 of FIG. 2 utilizes generative AI model 130 to generate a question 214 based on the search term included in query 210. Question generator 116 utilizes generative AI model 130 in various ways, in embodiments. For instance, as shown in FIG. 2, question generator 116 provides a prompt 212 to generative AI model 130 that causes generative AI model 130 to generate question 214 based on the search term included in query 210. In embodiments, prompt 212 comprises the search term and instructions to generate a question based on it. In some embodiments, (e.g., as described with respect to FIG. 6) prompt 212 comprises additional context associated with query 210. As shown in FIG. 2, question generator 116 provides question 214 in a question signal 216 to data identifier 118 and flowchart 300 continues to step 306.

In order to better understand the operation of SRI system 104 and its subcomponents with respect to flowchart 300, a non-limiting running example is described herein. In this example, suppose query 210 received in step 302 included search term "linear regression". In this context, in step 302, question generator 116 provides prompt 212 comprising "linear regression" to generative AI model 130 to generate question 214 based on the search term "linear regression." For instance, generative AI model 130 in this example infers the user that submitted query 210 intended to ask the question: "What is linear regression in machine learning?"

In step 306, data semantically similar to the question is identified. For example, data identifier 118 of FIG. 2 identifies data 220 that is semantically similar to question 214. In examples, data identifier 118 identifies data 220 by matching search terms of query 210 to keywords of data files (e.g., tag(s) of a data file, text within a data file, text within a description of a data file), by matching text of question 214 to keywords of data files, by measuring similarity between embedding(s) that semantically describe question 214 (also referred to as "question embeddings" herein)and embedding(s) that semantically describe data files (also referred to as "data embeddings" herein), and/or by performing another method to determine data 220 is semantically similar to question 214, as described elsewhere herein. For instance, as shown in FIG. 2, data identifier 118 receives data 218 and identifies data 220 from data 118 (e.g., as portions of data 218 that are semantically similar to question 214). In accordance with an embodiment, the data 218 is stored by SRI system 104 (e.g., in memory of SRI system 104 not shown in FIG. 2). In an alternative embodiment, data 218 is stored in one or more storages external to and accessible by SRI system 104 (e.g., an external database, storage 206, a data catalog, etc.). In accordance with an embodiment, data identifier 118 comprises logic for managing and retrieving data 218. Alternatively, and as described further with respect to FIGS. 7 and 8, data identifier 118 leverages a separate service/component, also referred to as a "knowledge service" herein, to retrieve data 218. As shown in FIG. 2, data identifier 118 provides data 220 to prompter 202 and flowchart 300 continues to step 308.

In step 308, the LLM is utilized to determine an answer to the question based on the question and the identified data. For example, prompter 202 of FIG. 2 utilizes generative AI model 130 to determine an answer 224 based on question 214 and data 220. In examples, prompter 220 leverages generative AI model 130 in various ways. For instance, as shown in FIG. 2, prompter 202 generates a prompt 222 and provides prompt 222 to generative AI model 130 to cause generative AI model 130 to generate/determine answer 224. In examples, prompt 222 comprises question 214, data 220 (or links to data 220, universal resource locators of data 220, and/or the like), and/or any other data or other information suitable for causing generative AI model 130 to determine answer 224. In examples, answer 224 comprises text answering question 214 (e.g., text from a webpage or other content answering question 214, text summarizing one or more webpage(s) or other content answering question 214, and/or the like), a picture (or hyperlink thereto) related to the text or otherwise answering question 214, a video (or hyperlink thereto) answering question 214, a hyperlink to a webpage comprising an answer to question 214, and/or other content and/or links thereto answering question 214 (or supporting an answer to question 214). For instance, considering the non-limiting running example described with respect to steps 302 and 304, suppose answer 224 comprises hyperlinks to webpages related to linear regression in machine learning along with a text summary describing linear regression used in machine learning formulated from text in the webpages. As shown in FIG. 2, generative AI model 130 provides answer 224 to pair generator 204 and flowchart 300 continues to step 310.

In step 310, a question-answer pair comprising the question and the answer is generated. For example, pair generator 204 of FIG. 2 generates a QA pair 226 comprising question 214 and answer 224. In some embodiments, pair generator 204 generates a tuple comprising QA pair 226 and the search terms utilized in the generation of QA pair 226 (i.e., the search terms included in query 210). For instance, with continued reference to the non-limiting running example described with respect to the foregoing steps of flowchart 300, pair generator 204 in accordance with an embodiment generates a tuple comprising search term "linear regression", question "What is linear regression in machine learning?", and answer 224 answering what linear regression is in machine learning. An example of such an answer is described further with respect to FIG. 12. In examples, pair generator 204 provides QA pair 226 to storage 206 (e.g., as shown in FIG. 2) for storage thereby (e.g., as a QA pair of QA pairs 208), provides QA pair 226 to an application for display thereby (e.g., in an interface, as a search result to a query), and/or provides QA pair 226 to search engine system 106 of FIG. 1 for use thereof. Additional details regarding storage of QA pair 226 are described with respect to FIG. 4, as well as elsewhere herein. Additional details regarding provision of QA pair 226 to an application or search engine system are described with respect to FIG. 5, FIG. 9, FIG. 10, and FIG. 11, as well as elsewhere herein.

Thus, an example operation of SRI system 104 has been described with respect to system 200 of FIG. 2 and flowchart 300 of FIG. 3. As described herein, SRI system 104 leverages generative AI model 130 to determine an answer from a search query by inferring a question from the query and answering the question. In this manner, SRI system 104 improves a search engine's capability for providing an appropriate result to a user' s search requiring the user to (e.g., manually) provide additional context or larger number of terms.

As discussed herein, in some examples, SRI system 104 stores QA pairs in storage (e.g., storage 206 of FIG. 2). SRI system 104 operates to store a QA pair in various ways, in examples. For instance, FIG. 4 shows a flowchart 400 of a process for storing a question-answer pair, in accordance with an example embodiment. In accordance with an embodiment, system 200 of FIG. 2 operates according to flowchart 400. Flowchart 400 need not be performed in all embodiments. Further structural and operational embodiments will be apparent to persons skilled in the relevant art(s) based on the following descriptions of FIG. 4 with respect to FIG. 2.

Flowchart 400 comprises step 402. In step 402, the question-answer pair is stored in a question-answer pair database. For example, pair generator 204 of FIG. 2 provides QA pair 226 to storage 206 for storage thereby (e.g., as a QA pair of QA pairs 208). In this context, SRI system 104 generates a library of QA pairs that is accessible to search engine system 106 (e.g., via an application programming interface (API) thereof) to determine a direct answer to a search query received by the system. In this manner, search engine system 106 determines a direct answer in real time using less resources. Furthermore, in situations where separate users perform the same search (or the same user performs the same search at a different time) less compute resources are consumed to answer a repeated search query, as the corresponding QA pair is already stored in QA pairs 226 and is identifiable through methods/techniques described elsewhere herein (e.g., as described with respect to FIGS. 9 and 10, and elsewhere herein).

In accordance with an embodiment, the question-answer pair is stored as a value in a key-value store (e.g., a key-value store of storage 206, or another key-value store not shown in FIG. 2). In this context, the search term corresponding to the question answer pair is stored as a key in the key-value store. In this manner, search terms are mapped to question-answer pairs such that a search engine system (e.g., search engine system 106 of FIG. 1) is able to use a received search term as an index for determining whether or not a question-answer pair has been generated for the search term. In accordance with a further embodiment, embeddings semantically representing the search term are stored as keys in the key-value store. In this context, a search engine system is able to determine whether embeddings in the key-value store are semantically similar to embeddings of a received search term. By utilizing a key-value store, such embodiments reduce the time and/or compute resources expended in locating/determining a direct answer to a search query, thereby reducing the time a user has to spend searching for an answer. Furthermore, in implementations where direct answers are provided in lieu of search results, fewer compute resources are expended in producing an answer to a search query. Additional details regarding a search engine system obtaining a question-answer pair from storage 206 (or a key-value store) are further described with respect to FIGS. 9 and 10, as well as elsewhere herein.

As described herein, SRI system 104 improves interpretation and response to search queries. SRI system 104 operates in various ways to improve query interpretation and response, in embodiments. For example, FIG. 5 shows a flowchart 500 of a process for providing a question-answer pair to a search engine system, in accordance with an example embodiment. In accordance with an embodiment, SRI system 104 of FIG. 2 operates according to flowchart 500. Flowchart 500 need not be performed in all embodiments. Further structural and operational embodiments will be apparent to persons skilled in the relevant art(s) based on the following description of FIGS. 5 with respect to FIG. 2.

Flowchart 500 comprises step 502. In step 502, the question-answer pair is provided to a search engine system responsive to the search engine system receiving a second search query. For instance, pair generator 204 causes QA pair 226 to be provided to search engine system 106 responsive to search engine system receiving a second search query. In accordance with an embodiment, SRI system 104 receives the second search query from search engine system 106, determines the search query is similar to query 210, and provides QA pair 226 to search engine system 106. In this context, examples of SRI system 104 determines the second search query is similar to query 210 by measuring similarity between query 210 and the second search query (e.g., based on embeddings, based on matching text, and/or the like), generating a question from the second search query (e.g., by utilizing generative AI model 130 in a similar manner as described with respect to step 304 of flowchart 300 of FIG. 3) and measuring similarity between question 214 and the question generated from the second search query, and/or by otherwise determining the second search query is similar to query 210. In an alternative embodiment, and as described further with respect to FIGS. 9 and 10, search engine system 106 comprises logic for determining if the queries are similar. In accordance with an embodiment in this alternative context, SRI system 104 receives an indication that the second search query is similar and provides QA pair 226 to search engine system 106. In accordance with another embodiment in this alternative context, search engine system 106 obtains (e.g., retrieves) QA pair 226 from storage 206.

Embodiments of question generator 116 operate in various ways to leverage a generative AI model to generate a question. For example, FIG. 6 shows a flowchart 600 of a process for prompting a generative AI model to generate a question, in accordance with an example embodiment. Flowchart 600 is a further example of step 304 of flowchart 300 of FIG. 3, in an embodiment. In accordance with an embodiment, question generator 116 of FIG. 2 operates according to flowchart 600. Not all steps of flowchart 600 need be performed in all embodiments. Further structural and operational embodiments will be apparent to persons skilled in the relevant art(s) based on the following description of FIG. 6 with respect to FIG. 2.

Flowchart 600 begins with step 602. In step 602, additional context is determined based on a domain of a search engine system that received the first search query via user interaction, a keyword included in the first search query, a filter applied to the first search query, or a first webpage presented in a user interface of a computing device prior to navigation to a second webpage of the search engine. For example, question generator 116 of FIG. 2 determines additional context based on a domain of search engine system 106 that received query 210 via user interaction (e.g., with application 114), a keyword included in query 210, a filter applied to query 210, a webpage presented in a user interface of computing device 102 prior to navigation to a webpage of search engine system 106 (e.g., via click-through data), and/or any other information that question generator 116 may analyze to determine additional context of query 210. Examples of additional context include, but are not limited to, an organization, a product or subscription associated with the organization, and/or any other information associated with query 210 suitable for providing additional context to query 210. In examples, domain information is included in communication received from search engine system 106 (e.g., in a message or in telemetry data) or identified by question generator 116 based on received communication. In examples, keywords include, but are not limited to, product names, subscription names, organization names, product types, acronyms, and/or the like. In examples, filters are applied to a query based on a user selection in an application/webpage, a function of search engine 106, and/or a keyword or search operator included in the query. In examples, applied filters filter searches (and/or search results) based on filter criteria, as described elsewhere herein. In examples, click-through data includes a webpage visited (e.g., immediately) prior to a search query being submitted, a webpage the search query was submitted in, a webpage visited (e.g., immediately) subsequent to a search query being submitted (e.g., in a training embodiment, a webpage of a search result selected after search results were presented), and/or any other data associated with previous or future navigations in a web browser or other application associated with the search query.

In step 604, a prompt to cause the LLM to generate the question is generated, the prompt comprising the first search term and the additional context. For example, question generator 116 of FIG. 2 generates prompt 212 comprising the search term(s) of query 210 and additional context determined in step 602 and provides prompt 212 to generative AI model 130 to cause generative AI model 130 to generate question 214 based on the search term(s) and the additional context. By identifying/determining additional context and including it in the prompt to generative AI model 130, embodiments of question generator 116 improve the capability of generative AI model 130 inferring a question based on the search term. Thus, the likelihood of generating an appropriate question corresponding to the search term is increased, thereby improving the quality of the QA pair (e.g., QA pair 226) generated for that search term.

Examples of data identifier 118 are configured in various ways to identify data semantically similar to a question. Depending on the implementation, data identifier 118 identifies the data or leverages an external service and/or model to identify the data. An example implementation of data identifier 118 leveraging an external service and a model to identify the data is described with respect to FIG. 7. FIG. 7 shows a block diagram of a system 700 for identifying data semantically similar to the question, in accordance with an example embodiment. As shown in FIG. 7, system 700 comprises data identifier 118 and embedding model 128, as described with respect to FIG. 1, as well as a knowledge service 702 and a storage 704. Knowledge service 702 is configured to retrieve documents and other data based on provided input. As shown in FIG. 7, knowledge service 702 is external to data identifier 118 (e.g., as a separate component of SRI system 104, a service executing on hardware separate from SRI system 104 (e.g., a knowledge service server, not shown in FIG. 1 or 7), etc.). In an alternative implementation of system 700, data identifier 118 and knowledge service 702 are integrated as a single component and/or service of SRI system 104.

Storage 704, in accordance with an embodiment, is a further example of storage 206 of FIG. 2. Alternatively, storage 704 is a separate storage from storage 704. Storage 704 stores data used by and/or generated by data identifier 118, knowledge service 702, and/or embedding model 128 of FIG. 7. For instance, as shown in FIG. 7, storage 704 stores data files 706. Data files 706 comprises data accessible to knowledge service 702. In accordance with an embodiment, data files 706 include files referenced by or included in results presented by search engine system 106 (e.g., "search results"). Examples of data files 706 include, but are not limited to, text documents, image files, video files, audio files, webpages, application files, and/or any other data file accessible to knowledge service 702 and/or data identifier 118. In accordance with an embodiment, data files 706 are specific to a domain corresponding to search engine system 106.

To better understand the operation of system 700, FIG. 7 is described with respect to FIG. 8. FIG. 8 shows a flowchart 800 of a process for identifying data semantically similar to the question, in accordance with an example embodiment. Flowchart 800 is a further example of step 306 of flowchart 300 of FIG. 3, in an embodiment. In accordance with an embodiment, system 700 of FIG. 7 operates according to flowchart 800. Not all steps of flowchart 800 need be performed in all embodiments. Further structural and operational embodiments will be apparent to persons skilled in the relevant art(s) based on the following descriptions of FIGS. 7 and 8.

Flowchart 800 begins with step 802. In step 802, a question embedding describing the question is determined. For example, knowledge service 702 of FIG. 7 leverages embedding model 128 to determine a question embedding 712 describing question 214 of FIG. 2. Knowledge service 702 operates to determine question embedding 712 in various ways, in examples. For instance, as shown in FIG. 7, data identifier 118 provides question information 708 to knowledge service 702 (e.g., in an API call to knowledge service 702). Question information 708 comprises question 214, in an embodiment. Question information 708 causes knowledge service 702 to provide a question embedding prompt 710 to embedding model 128. In accordance with an embodiment, question embedding prompt 710 causes embedding model 128 to generate question embedding 712 semantically describing question 214.

In step 804, a similarity between the question embedding and a data embedding describing the data is determined to satisfy a similarity criterion. For instance, knowledge service 702 of FIG. 7 determines a similarity between question embedding 712 and a data embedding 716 satisfies a similarity criterion. Example measures of similarity include, but are not limited to, Euclidean distance similarity, cosine similarity, dot product similarity, Jaccard similarity, Levenshtein similarity, and/or any other technique suitable for measuring similarity between embeddings. In an embodiment, the similarity criterion specifies a threshold to be satisfied by a measure of similarity between question embedding 712 and data embedding 716. In accordance with an embodiment, knowledge service 702 selects data that satisfies the threshold from data 706 to result in data 218 and/or data 220. In accordance with another embodiment, knowledge service 702 selects the *n* most similar data of data 706 to question 214 (where *n* is 1, 2, 3, greater than 3, tens, or even greater numbers of pieces of data).

Data embedding 716 is determined in various ways, in embodiments. For instance, in accordance with an embodiment, data embedding 716 is stored in storage 704 and mapped to the corresponding data file of data files 706. Alternatively, and as shown in FIG. 7, knowledge service 702 provides a data embedding prompt 714 to embedding model 128 to cause embedding model 128 to generate data embedding 716. In embodiments, knowledge service 702 prompts embedding model 128 to generate a data embedding corresponding to a piece of data (e.g., a data file of data files 706), a subset of a piece of data (e.g., a portion of a data file of data files 706), to generate a data embedding corresponding to a group of data (e.g., a group of data files 706), or all of data files 706. In accordance with an embodiment, knowledge service 702 prompts embedding model 128 to generate data embeddings subsequent to updates to data files 706. In examples, data embeddings such as data embedding 716 are generated independent from or during generation of QA pairs.

Thus, examples of identifying data has been described with respect to system 700 of FIG. 7 and flowchart 800 of FIG. 8. In the described example, data identifier 118 and knowledge service 702 leverage embedding model 128 to identify data based on embeddings; however, embodiments of data identification described herein are not so limited. For instance, in an alternative embodiment, knowledge service 702 identifies data by matching text included in a question to text in data files 706 or text describing data files 706. As a non-limiting example, suppose data files of data files 706 comprise a summary describing the data file. In this non-limiting example, knowledge service 702 can identify data similar to a question by matching text of the question to text in the summaries.

### IV. Example Offline Search Improvement Embodiments

As described herein, embodiments of SRI systems (e.g., SRI system 104) leverage generative AI model(s) to interpret and respond to search queries. In some embodiments, a search engine system utilizes question-answer pairs generated "offline", or prior to (or otherwise independent of) the search engine system receiving a new search query. In this context, SRI system 104 generates QA pairs 208 based on previous searches and/or other historic data. Thus, SRI system 104 generates a "library" of QA pairs usable by search engine system 106 for improving searches. In examples, query analyzer 122 of search engine system 106 is configured in various ways to utilize QA pairs 208 generated by SRI system 104. For example, FIG. 9 shows a block diagram of a system 900 for causing a response to a search query to be presented in a graphic user interface, in accordance with an example embodiment. As shown in FIG. 9, system 900 comprises computing device 102 (comprising application 114), query analyzer 122, search engine 124, generative AI model 130, and embedding model 128, as described with respect to FIG. 1, and storage 206 (storing QA pairs 208), as described with respect to FIG. 2. As also shown in FIG. 9, query analyzer 122 comprises a search term analyzer 902 and a pair matcher 904 and computing device 102 comprises a graphic user interface (GUI) 906. Search term analyzer 902 and pair matcher 904 are implemented as sub-components and/or sub-services of query analyzer 122. Depending on the implementation, GUI 906 is a GUI of application 114, a GUI corresponding to search engine 124, or another GUI of computing device 102 suitable for presenting questions, answers, and/or search results determined by query analyzer 122 and/or search engine 124, as described herein. An example of GUI 906 is described with respect to FIG. 12.

In order to better understand the operation of system 900, FIG. 9 is described with respect to FIG. 10. FIG. 10 shows a flowchart 1000 of a process for causing a response to a search query to be presented in a graphic user interface, in accordance with an example embodiment. In accordance with an embodiment, query analyzer 122 of FIG. 9 operates according to flowchart 1000. Not all steps of flowchart 1000 need be performed in all embodiments. Further structural and operational embodiments will be apparent to persons skilled in the relevant art(s) based on the following descriptions of FIGS. 9 and 10.

Flowchart 1000 begins with step 1002. In step 1002, a search query comprising a search term is received. For example, search term analyzer 902 receives search query 908 ("query 908") from application 114, and query 908 comprises a search term. In accordance with an embodiment, application 114 presents a window (e.g., in GUI 906) in which a user interacts with an element (e.g., a text field or search box) to enter search terms. Further suppose application 114 presents a button (or other element) that, when interacted with, causes query 908 comprising the search terms entered in the element to be generated and transmitted to search term analyzer 902. Alternatively, application 114 provides another technique for causing transmission of query 908 (e.g., pressing a button or key on a peripheral device of computing device 102, e.g., the "return" key of a keyboard). In accordance with an embodiment, search term analyzer 902 provides search terms included in query 908 to pair matcher 904 as analysis signal 918 and flowchart 1000 continues to step 1002.

In some embodiments, search term analyzer 902 determines additional (or alternative) information to include in analysis signal 918. In embodiments, the transmission comprising query 908 further comprises additional information associated with query 908, e.g., the domain of a web page in which the query was submitted in, a filtered applied to query 908, an organization associated with query 908. In this manner, search term analyzer 902 determines additional context (e.g., in a similar manner to that described with respect to flowchart 600 of FIG. 6) to include in analysis signal 918. In accordance with another embodiment, search term analyzer 902 provides a prompt 910 to generative AI model 130 to cause generative model 130 to generate a question 912 and includes question 912 in analysis signal 918. Prompt 910 comprises query 908, search terms included in query 908, and/or additional context determined by search term analyzer 902. In accordance with another embodiment, search term analyzer 902 provides an embedding prompt 914 to embedding model 128 to cause embedding model 128 to generate embeddings 916 and includes embeddings 916 in analysis signal 918. In examples, prompt 914 comprises search terms included in query 908, query 908, and/or question 912.

In step 1004, a determination of whether or not there is a QA pair that matches the search term is made. For example, pair matcher 904 determines whether or not a QA pair of QA pairs 208 matches a search term included in query 908. In examples, pair matcher 904 compares text of the search term to text of QA pairs 208, compares text of question 912 to QA pairs 208, compares embeddings 916 to embeddings of QA pairs 208, and/or retrieves matching QA pairs from a key-value store (e.g., using the search term as a key, using question 912 as a key, using embeddings 916 as a key, etc.). In embodiments, pair matcher 904 matches the search term, question, or embeddings to QA pairs of QA pairs 208 by measuring similarity between the search term, question, or embeddings and the QA pair(s) (e.g., utilizing a measure of similarity technique described elsewhere herein). If a QA pair of QA pairs 208 is determined to match the search term, flowchart 1000 continues to step 1006. If pair matcher 904 fails to determine a QA pair matches the search term (e.g., none of QA pairs 208 match the search term), flowchart 1000 continues to step 1008.

In embodiments, a QA pair of QA pairs 208 matches the search query if a measure of similarity between the search term, a corresponding question (e.g., question 912), and/or corresponding embeddings (e.g., embeddings 916) and the QA pair or an embedding of the QA pair satisfies pair similarity criterion. In accordance with an embodiment, pair similarity criterion specifies a threshold to be satisfied by a measure of similarity between the search term/question/embedding and the QA pair/embedding. In accordance with an embodiment, pair matcher 904 identifies the QA pair that most satisfies the pair similarity criterion (e.g., has the highest value measure of similarity with the search term/question/embedding). Alternatively, pair matcher 904 selects multiple QA pairs that satisfy the pair similarity criterion.

In step 1006, the question and the answer of the matching QA pair are caused to be presented in a GUI corresponding to the search engine. For example, pair matcher 904 of FIG. 9 transmits a direct answer signal 920 to GUI 906 to cause the question and the answer of the matching pair determined in step 1004 to be presented in GUI 906. In accordance with an embodiment, direct answer signal 920 causes a single answer to be presented in GUI 906. In this context, GUI 906 displays the answer of the matching QA pair (and optionally additional information such as, but not limited to, reference links). In accordance with an embodiment, GUI 906 poses the question of the matching QA pair as a suggested interpretation of search query 908. For instance, if search query 908 was "linear regression", direct answer signal 920 in a non-limiting example causes GUI 906 to display a phrase similar to "Did you mean to ask: 'What is linear regression in machine learning?'" In this context, a user is able to evaluate if the answer shown in GUI 906 is relevant to their intended search, thereby improving the user search experience. For instance, if the user is able to determine that the posed question is a correct interpretation of their intended search, they may decide to review the accompanying answer without having to scroll through additional search results, thereby saving time.

As mentioned with respect to step 1004, pair matcher 904 in some implementations determines that multiple QA pairs satisfy pair similarity criterion. In this context, direct answer signal 920 causes the "most similar" answer to be presented or causes multiple answers to be presented in GUI 906. In an example embodiment where multiple answers are presented in GUI 906, each corresponding question is presented as a potential question inferred from the user's response with the corresponding answer. In an alternative example embodiment where multiple answers are presented in GUI 906, pair matcher 904 forms a summarizing answer based on the multiple answers and provides direct answer signal 920 to cause the summarizing answer to be presented in GUI 906 (and optionally references to supporting content (e.g., documents, webpages, videos, etc.)).

In step 1008, a search engine is caused to determine search results to be presented in a GUI corresponding to the search engine. For example, pair matcher 904 transmits a search command 922 to search engine 124 to cause search engine 124 to determine search results 926 to be presented in GUI 906. In this context, if a direct answer is not determined from pair matcher 904 in step 1004, search engine functionality is still provided with respect to query 908. Furthermore, in embodiments where search engine 124 is not commanded to determine search results unless pair matcher 904 fails to determine a direct answer, compute resources utilized to determine an answer to search queries are reduced if a direct answer is determined.

While flowchart 1000 is described with respect to presenting search results (e.g., only) if pair matcher 904 fails to determine a direct answer, embodiments described herein are not so limited. For example, in some embodiments, pair matcher 904 transmits a command 924 to search engine 124 to cause search engine 124 to determine search results 926 in tandem with and/or independent of the determination of a direct answer by pair matcher 904. Alternatively, search engine 124 receives query 908 in tandem with and/or independent of query analyzer 122 receiving query 908. In either of these alternative cases, search engine 124 determines search results 926 for query 908 and causes search results 926 to be displayed in GUI 906 (e.g., alongside any determined direct answer(s)).

### V. Example Online Search Improvement Embodiments

As discussed elsewhere herein, some embodiments of SRI systems operate as "online" search improvement systems. In this context, the SRI system (e.g., SRI system 104) utilizes generative AI model(s) to determine a question and answer subsequent to a search query submitted by a user (e.g., in real time). Depending on the implementation, the online version of SRI system 104 is a separate system from search engine system 106 (e.g., as shown in FIG. 1) or integrated in search engine system 106 (e.g., as a service or subcomponent of search engine system 106, as part of query analyzer 122, and/or the like).

An online version of SRI system 104 operates in various ways to determine a direct answer FIG. 11 shows a flowchart 1100 of a process for determining a question and answer from a search term during an active session of a search engine, in accordance with an example embodiment. In accordance with an embodiment, SRI system 104 and/or search engine system 106 of FIG. 1 operate according to flowchart 1100. Not all steps of flowchart 1100 need be performed in all embodiments. Further structural and operational embodiments will be apparent to persons skilled in the relevant art(s) based on the following descriptions of FIG. 11 with respect to FIGS. 1, 2, and 9.

Flowchart 1100 begins with step 1102. In step 1102, a first search query is received during an active session of a search engine, the search query comprises a search term. For example, search engine system 106 of FIG. 1 receives a search query (e.g., search query 908 of FIG. 9) from application 114 during an active session of search engine 124. The search query comprises search terms submitted via user interaction and, optionally, additional information associated with the search query, as described elsewhere herein.

In step 1104, an LLM is utilized to generate a question based on the search term. For example, search engine system 106 provides the search query to question generator 116 of SRI system 104 to cause question generator 116 to prompt generative AI model 130 to generate a question based on the search term included in the search query received in step 1102 (e.g., in a similar manner as described with respect to step 304 of FIG. 3). In some embodiments, question generator 116 determines additional context to include in the prompt to generative AI model 130 (e.g., as described with respect to flowchart 600 of FIG. 6).

In step 1106, data semantically similar to the question is identified. For example, data identifier 118 of FIG. 1 identifies data semantically similar to the question generated in step 1104 (e.g., in a similar manner as described with respect to step 306 of FIG. 3). In some embodiments, data identifier 118 utilizes an external service (e.g., a knowledge service) to identify the data (e.g., in a similar manner as described with respect to system 700 of FIG. 7 and flowchart 800 of FIG. 8).

In step 1108, the LLM is used to determine an answer to the question based on the question and the identified data. For example, prompter 202 of FIG. 2 utilizes generative AI model 130 to determine an answer to the question generated in step 1104 based on the question and the data identified in step 1106 (e.g., in a similar manner as described with respect to step 308 of FIG. 3).

In step 1110, presentation of the question and the answer in a GUI of the search engine is caused. For example, pair generator 204 of FIG. 2 (or another component of SRI system 104) causes presentation of the question generated in step 1104 and/or the answer determined in step 1108 in GUI 906. In some embodiments, pair generator 204 (or the other component of SRI system 104) provides the question and/or answer to search engine system 106 to cause presentation of the question and/or answer in GUI 906.

In an example implementation, search engine system 106 and/or SRI system 104 implements a hybrid offline and online search improvement approach. For instance, as a non-limiting example, query analyzer 122 operates in a similar manner described with respect to steps 1002 and 1004 of flowchart 1000 of FIG. 10 to determine if an existing QA pair matches a search term received from application 114. If a matching QA pair is found, operation proceeds in a similar manner to that described with respect to step 1006. If a matching QA pair is not found, in this alternative hybrid approach, query analyzer 122 provides the search term to SRI system 104 and SRI system 104 determines a direct answer in a manner similar to that described with respect to flowchart 1100.

Thus, examples of "online" and "hybrid" search result improvement have been described with respect to flowchart 1100 of FIG. 11. In this context, pair generator 204 causes answer 224 to be presented in real time in a user interface, thereby improving the quality of a result to a user's search. Furthermore, e.g., in a hybrid approach, online implementations of pair generator 204 are able to provide direct answers to a search query that is not similar to predetermined QA pairs. Additional details regarding online (and hybrid) search result improvement are described with respect to FIG. 11, as well as elsewhere herein.

### VI. Example User Interface Embodiments

FIG. 12 depicts an example graphic user interface of a web browser 1200 (GUI 1200) depicting a direct search result, in accordance with an example embodiment. As shown in FIG. 12, GUI 1200 comprises an address bar 1202 and window 1204. Address bar 1202 comprises a text field that displays the name or uniform resource locator (URL) of a web page displayed in window 1204. Window 1204 displays the web page. For instance, as shown in FIG. 12, window 1204 displays a web page for a search engine. The displayed web page comprises a search bar 1206, a search button 1208, a filter selection window 1210, a direct answer display window 1212, and search results 1214. Search bar 1206 is a text field where a search query can be entered. Search button 1208 is a button that can be clicked (e.g., using a pointer) or otherwise interacted with to cause the search query in search bar 1206 to be transmitted to a search engine system (e.g., search engine system 106 of FIG. 1).

Filter window 1210 shows filters that can be applied to a search or search results (e.g., subsequent to submission of the search query). In FIG. 12, filter window 1210 shows content filters for filtering searches/results based on content type (e.g., a content area type (e.g., reference content, documentation content, training content, etc.), a format of content (e.g., a web page, a document, a video, a picture/image, etc.), and/or the like) and products. Other implementations of filter window 1210 include filters in addition to or in place of the filters shown in FIG. 12, e.g., filters for filtering searches/results based on dates (e.g., date the content was uploaded, last date the content was updated, etc.), based on subscriptions, based on product information (e.g., cost, brand, etc., in a search engine for a shopping website), and/or any other type of filter suitable for filtering searches and/or search results, as described elsewhere herein and/or as would otherwise be understood by a person ordinarily skilled in the relevant art(s) having benefit of this disclosure. In accordance with an embodiment where filters are applied prior to a search query being submitted, the selected filters are used by a query analyzer (e.g., query analyzer 122 of FIG. 1) or an SRI system (e.g., SRI system 104 of FIG. 1) to (e.g., attempt to) determine a direct answer. In accordance with an embodiment where filters are applied after a search query is submitted, the query analyzer (or the SRI system) determines if the direct answer should be updated.

Direct answer display window 1212 displays a direct answer determined or generated based on the search query entered in search bar 1206. For example, suppose, as shown in FIG. 12, "linear regression" was entered in search bar 1206 and search 1208 was interacted with to cause a search query comprising "linear regression" to be provided to query analyzer 122 of FIG. 1. In an offline implementation, query analyzer 122 determines if a query-answer pair of QA pairs 208 matches "linear regression" (e.g., in a manner similar to that described with respect to FIGS. 11 and 12). Further suppose query analyzer 122 determines a QA pair matches "linear regression" and causes the QA pair to be displayed in direct answer display window 1212. In this context, as shown in FIG. 12, the question "What is linear regression in machine learning?" is proposed as a possible question intended by the user that entered the search terms in search bar 1206. Below the question, the answer of the matching QA pair is shown, e.g., a summarizing paragraph describing linear regression in machine learning and references related to the summarizing paragraph. In a further example, the references shown in direct answer display window 1212 include hyperlinks to web pages or other content associated with the references. In some embodiments, direct answer display window 1212 is hidden prior to submission of a search query. Alternatively, direct answer display window 1212 is blank or an otherwise empty window prior to submission of a search query.

Search results 1214 display search results generated by a search engine (e.g., search engine 124) based on the search query entered in search bar 1206. In some embodiments, search results 1214 include the references shown in direct answer display window 1212 (e.g., "Web Page 1" and "Web Page 2" in FIG. 12). Alternatively, search results 1214 include results other than those referenced in direct answer display window 1212, thereby reducing repetition in results of the submitted search query.

Thus, an example of window 1204 displaying a direct answer and search results has been described with respect to FIG. 12. In some embodiments, window 1204 does not include search results 1214. For instance, in a non-limiting example, window 1204 only displays direct answer display window 1212 (e.g., displaying the question, the direct answer and (optionally) associated references in response to a submitted search query). In another alternative embodiment, window 1204 comprises a button (or other input element not shown in FIG. 12, e.g., a toggle switch, a check box, and/or the like) that, when interacted with, causes search results 1214 to be produced (e.g., either displayed or fetched by search engine 124). In some examples, window 1204 displays direct answer display window 1212 and search results 1214 (e.g., nearly) simultaneously. In an alternative example, direct answer display window 1212 displays its direct answer independent of display of search results 1214. In this context, direct answer display window 1212 is able to provide a direct response based on query analyzer 122 matching a QA pair to the search query while search engine 124 determines search results 1214. In some examples, query analyzer 122 determines the matching QA pair before search engine 124 determines search results 1214 (e.g., as the number of matching QA pairs may be smaller than the number of possible search results and/or matching words in a search query to keys in a key-value store takes less time than determining search results 1214).

### VII. Example Computer System Implementation

Each of computing device 102, SRI system 104, search engine system 106, embedding server 108, model server 110, system 200, storage 206, system 700, storage 704, and/or system 900 are implemented in hardware, or hardware combined with one or both of software and/or firmware. For example, application 114, question generator 116, data identifier 118, QA pair generator 120, query analyzer 122, search engine 124, search telemetry monitor 126, embedding model 128, generative AI model 130, prompter 202, pair generator 204, knowledge service 702, search term analyzer 902, pair matcher 904, GUI 1200, and/or each of the components described therein, and/or the steps of flowcharts 300, 400, 500, 600, 800, 1000, and/or 1100 are each implemented as computer program code/instructions configured to be executed in one or more processors and stored in a computer readable storage medium. Alternatively, application 114, question generator 116, data identifier 118, QA pair generator 120, query analyzer 122, search engine 124, search telemetry monitor 126, embedding model 128, generative AI model 130, prompter 202, pair generator 204, knowledge service 702, search term analyzer 902, pair matcher 904, GUI 1200, and/or each of the components described therein, and/or the steps of flowcharts 300, 400, 500, 600, 800, 1000, and/or 1100 are each implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 13. FIG. 13 shows a block diagram of an exemplary computing environment 1300 that includes a computing device 1302. Computing device 1302 is an example of computing device 102, conversion server 104, embeddings server 106, database 108, model server 110, and/or engine server 112, which each include one or more of the components of computing device 1302. In some embodiments, computing device 1302 is communicatively coupled with devices (not shown in FIG. 13) external to computing environment 1300 via network 1304. In accordance with an embodiment, network 1304 is an example of network 112 of FIG. 1. Network 1304 comprises one or more networks such as local area networks (LANs), wide area networks (WANs), enterprise networks, the Internet, etc. In examples, network 1304 includes one or more wired and/or wireless portions. In some examples, network 1304 additionally or alternatively includes a cellular network for cellular communications. Computing device 1302 is described in detail as follows.

Computing device 1302 can be any of a variety of types of computing devices. Examples of computing device 1302 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1302 is a stationary computing device such as a desktop computer, a personal computer (PC), a stationary server device, a minicomputer, a mainframe, a supercomputer, etc.

As shown in FIG. 13, computing device 1302 includes a variety of hardware and software components, including a processor 1310, a storage 1320, a graphics processing unit (GPU) 1342, a neural processing unit (NPU) 1344, one or more input devices 1330, one or more output devices 1350, one or more wireless modems 1360, one or more wired interfaces 1380, a power supply 1382, a location information (LI) receiver 1384, and an accelerometer 1386. Storage 1320 includes memory 1356, which includes non-removable memory 1322 and removable memory 1324, and a storage device 1388. Storage 1320 also stores an operating system 1312, application programs 1314, and application data 1316. Wireless modem(s) 1360 include a Wi-Fi modem 1362, a Bluetooth modem 1364, and a cellular modem 1366. Output device(s) 1350 includes a speaker 1352 and a display 1354. Input device(s) 1330 includes a touch screen 1332, a microphone 1334, a camera 1336, a physical keyboard 1338, and a trackball 1340. Not all components of computing device 1302 shown in FIG. 13 are present in all embodiments, additional components not shown may be present, and in a particular embodiment any combination of the components are present. In examples, components of computing device 1302 are mounted to a circuit card (e.g., a motherboard) of computing device 1302, integrated in a housing of computing device 1302, or otherwise included in computing device 1302. The components of computing device 1302 are described as follows.

In embodiments, a single processor 1310 (e.g., central processing unit (CPU), microcontroller, a microprocessor, signal processor, ASIC (application specific integrated circuit), and/or other physical hardware processor circuit) or multiple processors 1310 are present in computing device 1302 for performing such tasks as program execution, signal coding, data processing, input/output processing, power control, and/or other functions. In examples, processor 1310 is a single-core or multi-core processor, and each processor core is single-threaded or multithreaded (to provide multiple threads of execution concurrently). Processor 1310 is configured to execute program code stored in a computer readable medium, such as program code of operating system 1312 and application programs 1314 stored in storage 1320. The program code is structured to cause processor 1310 to perform operations, including the processes/methods disclosed herein. Operating system 1312 controls the allocation and usage of the components of computing device 1302 and provides support for one or more application programs 1314 (also referred to as "applications" or "apps"). In examples, application programs 1314 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1310 includes one or more general processors (e.g., CPUs) configured with or coupled to one or more hardware accelerators, such as one or more NPUs 1344 and/or one or more GPUs 1342.

Any component in computing device 1302 can communicate with any other component according to function, although not all connections are shown for ease of illustration. For instance, as shown in FIG. 13, bus 1306 is a multiple signal line communication medium (e.g., conductive traces in silicon, metal traces along a motherboard, wires, etc.) present to communicatively couple processor 1310 to various other components of computing device 1302, although in other embodiments, an alternative bus, further buses, and/or one or more individual signal lines is/are present to communicatively couple components. Bus 1306 represents one or more of any of several types of bus structures, including a memory bus or memory controller, a peripheral bus, an accelerated graphics port, and a processor or local bus using any of a variety of bus architectures.

Storage 1320 is physical storage that includes one or both of memory 1356 and storage device 1388, which store operating system 1312, application programs 1314, and application data 1316 according to any distribution. Non-removable memory 1322 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1322 includes main memory and is separate from or fabricated in a same integrated circuit as processor 1310. As shown in FIG. 13, non-removable memory 1322 stores firmware 1318 that is present to provide low-level control of hardware. Examples of firmware 1318 include BIOS (Basic Input/Output System, such as on personal computers) and boot firmware (e.g., on smart phones). In examples, removable memory 1324 is inserted into a receptacle of or is otherwise coupled to computing device 1302 and can be removed by a user from computing device 1302. Removable memory 1324 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1388 are present that are internal and/or external to a housing of computing device 1302 and are or are not removable. Examples of storage device 1388 include a hard disk drive, a SSD, a thumb drive (e.g., a USB (Universal Serial Bus) flash drive), or other physical storage device.

One or more programs are stored in storage 1320. Such programs include operating system 1312, one or more application programs 1314, and other program modules and program data. Examples of such application programs include computer program logic (e.g., computer program code/instructions) for implementing application 114, question generator 116, data identifier 118, QA pair generator 120, query analyzer 122, search engine 124, search telemetry monitor 126, embedding model 128, generative AI model 130, prompter 202, pair generator 204, knowledge service 702, search term analyzer 902, pair matcher 904, GUI 1200, and/or each of the components described therein, and/or the steps of flowcharts 300, 400, 500, 600, 800, 1000, and/or 1100, and/or any individual steps thereof.

Storage 1320 also stores data used and/or generated by operating system 1312 and application programs 1314 as application data 1316. Examples of application data 1316 include web pages, text, images, tables, sound files, video data, and other data. In examples, application data 1316 is sent to and/or received from one or more network servers or other devices via one or more wired or wireless networks. Storage 1320 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1302 through one or more input devices 1330 and receives information from computing device 1302 through one or more output devices 1350. Input device(s) 1330 includes one or more of touch screen 1332, microphone 1334, camera 1336, physical keyboard 1338 and/or trackball 1340 and output device(s) 1350 includes one or more of speaker 1352 and display 1354. Each of input device(s) 1330 and output device(s) 1350 are integral to computing device 1302 (e.g., built into a housing of computing device 1302) or are external to computing device 1302 (e.g., communicatively coupled wired or wirelessly to computing device 1302 via wired interface(s) 1380 and/or wireless modem(s) 1360). Further input devices 1330 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1354 displays information, as well as operating as touch screen 1332 by receiving user commands and/or other information (e.g., by touch, finger gestures, virtual keyboard, etc.) as a user interface. Any number of each type of input device(s) 1330 and output device(s) 1350 are present, including multiple microphones 1334, multiple cameras 1336, multiple speakers 1352, and/or multiple displays 1354.

In embodiments where GPU 1342 is present, GPU 1342 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1342 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1344 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1328. In an example, NPU 1344 is configured for a data-driven parallel computing and is highly efficient at processing massive multimedia data such as videos and images and processing data for neural networks. NPU 1344 is configured for efficient handling of AI-related tasks, such as speech recognition, background blurring in video calls, photo or video editing processes like object detection, etc.

In embodiments disclosed herein that implement ML models, NPU 1344 can be utilized to execute such ML models, of which MLM 1328 is an example. For instance, where applicable, MLM 1328 is a generative AI model (e.g., such as generative AI model 130 of FIG. 1) that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1344 is used to train MLM 1328. To train MLM 1328, training data is that includes input features (attributes) and their corresponding output labels/target values (e.g., for supervised learning) is collected. A training algorithm is a computational procedure that is used so that MLM 1328 learns from the training data. Parameters/weights are internal settings of MLM 1328 that are adjusted during training by the training algorithm to reduce a difference between predictions by MLM 1328 and actual outcomes (e.g., output labels). In some examples, MLM 1328 is set with initial values for the parameters/weights. A loss function measures a dissimilarity between predictions by MLM 1328 and the target values, and the parameters/weights of MLM 1328 are adjusted to minimize the loss function. The parameters/weights are iteratively adjusted by an optimization technique, such as gradient descent. In this manner, MLM 1328 is generated through training by NPU 1344 to be used to generate inferences based on received input feature sets for particular applications. MLM 1328 is generated as a computer program or other type of algorithm configured to generate an output (e.g., a classification, a prediction/inference) based on received input features, and is stored in the form of a file or other data structure.

In examples, such training of MLM 1328 by NPU 1344 is supervised or unsupervised. According to supervised learning, input objects (e.g., a vector of predictor variables) and a desired output value (e.g., a human-labeled supervisory signal) train MLM 1328. The training data is processed, building a function that maps new data on expected output values. Example algorithms usable by NPU 1344 to perform supervised training of MLM 1328 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 1328 is an LLM, MLM 1328 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1328 is trained to learn patterns from unlabeled data. For instance, in embodiments where MLM 1328 implements unsupervised learning techniques, MLM 1328 identifies one or more classifications or clusters to which an input belongs. During a training phase of MLM 1328 according to unsupervised learning, MLM 1328 tries to mimic the provided training data and uses the error in its mimicked output to correct itself (i.e., correct weights and biases). In further examples, NPU 1344 perform unsupervised training of MLM 1328 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1344 need not necessarily be present in all ML model embodiments. In embodiments where ML models are present, any one or more of processor 1310, GPU 1342, and/or NPU 1344 can be present to train and/or execute MLM 1328.

One or more wireless modems 1360 can be coupled to antenna(s) (not shown) of computing device 1302 and can support two-way communications between processor 1310 and devices external to computing device 1302 through network 1304, as would be understood to persons skilled in the relevant art(s). Wireless modem 1360 is shown generically and can include a cellular modem 1366 for communicating with one or more cellular networks, such as a GSM network for data and voice communications within a single cellular network, between cellular networks, or between the mobile device and a public switched telephone network (PSTN). In examples, wireless modem 1360 also or alternatively includes other radio-based modem types, such as a Bluetooth modem 1364 (also referred to as a "Bluetooth device") and/or Wi-Fi modem 1362 (also referred to as an "wireless adaptor"). Wi-Fi modem 1362 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1364 is configured to communicate with another Bluetooth-capable device according to the Bluetooth short-range wireless technology standard(s) such as IEEE 802.15.1 and/or managed by the Bluetooth Special Interest Group (SIG).

Computing device 1302 can further include power supply 1382, LI receiver 1384, accelerometer 1386, and/or one or more wired interfaces 1380. Example wired interfaces 1380 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1380 of computing device 1302 provide for wired connections between computing device 1302 and network 1304, or between computing device 1302 and one or more devices/peripherals when such devices/peripherals are external to computing device 1302 (e.g., a pointing device, display 1354, speaker 1352, camera 1336, physical keyboard 1338, etc.). Power supply 1382 is configured to supply power to each of the components of computing device 1302 and receives power from a battery internal to computing device 1302, and/or from a power cord plugged into a power port of computing device 1302 (e.g., a USB port, an A/C power port). LI receiver 1384 is useable for location determination of computing device 1302 and in examples includes a satellite navigation receiver such as a Global Positioning System (GPS) receiver and/or includes other type of location determiner configured to determine location of computing device 1302 based on received information (e.g., using cell tower triangulation, etc.). Accelerometer 1386, when present, is configured to determine an orientation of computing device 1302.

Note that the illustrated components of computing device 1302 are not required or all-inclusive, and fewer or greater numbers of components can be present as would be recognized by one skilled in the art. In examples, computing device 1302 includes one or more of a gyroscope, barometer, proximity sensor, ambient light sensor, digital compass, etc. In an example, processor 1310 and memory 1356 are co-located in a same semiconductor device package, such as being included together in an integrated circuit chip, FPGA, or system-on-chip (SOC), optionally along with further components of computing device 1302.

In embodiments, computing device 1302 is configured to implement any of the above-described features of flowcharts herein. Computer program logic for performing any of the operations, steps, and/or functions described herein is stored in storage 1320 and executed by processor 1310.

In some embodiments, server infrastructure 1370 is present in computing environment 1300 and is communicatively coupled with computing device 1302 via network 1304. Server infrastructure 1370, when present, is a network-accessible server set (e.g., a cloud-based environment or platform). As shown in FIG. 13, server infrastructure 1370 includes clusters 1372. Each of clusters 1372 comprises a group of one or more compute nodes and/or a group of one or more storage nodes. For example, as shown in FIG. 13, cluster 1372 includes nodes 1374. Each of nodes 1374 are accessible via network 1304 (e.g., in a "cloud-based" embodiment) to build, deploy, and manage applications and services. In examples, any of nodes 1374 is a storage node that comprises a plurality of physical storage disks, SSDs, and/or other physical storage devices that are accessible via network 1304 and are configured to store data associated with the applications and services managed by nodes 1374.

Each of nodes 1374, as a compute node, comprises one or more server computers, server systems, and/or computing devices. For instance, a node 1374 in accordance with an embodiment includes one or more of the components of computing device 1302 disclosed herein. Each of nodes 1374 is configured to execute one or more software applications (or "applications") and/or services and/or manage hardware resources (e.g., processors, memory, etc.), which are utilized by users (e.g., customers) of the network-accessible server set. In examples, as shown in FIG. 13, nodes 1374 includes a node 1346 that includes storage 1348 and/or one or more of a processor 1358 (e.g., similar to processor 1310, GPU 1342, and/or NPU 1344 of computing device 1302). Storage 1348 stores application programs 1376 and application data 1378. Processor(s) 1358 operate application programs 1376 which access and/or generate related application data 1378. In an implementation, nodes such as node 1346 of nodes 1374 operate or comprise one or more virtual machines, with each virtual machine emulating a system architecture (e.g., an operating system), in an isolated manner, upon which applications such as application programs 1376 are executed.

In embodiments, one or more of clusters 1372 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1372 are included in a datacenter in a distributed collection of datacenters. In embodiments, exemplary computing environment 1300 comprises part of a cloud-based platform.

In an embodiment, computing device 1302 accesses application programs 1376 for execution in any manner, such as by a client application and/or a browser at computing device 1302.

In an example, for purposes of network (e.g., cloud) backup and data security, computing device 1302 additionally and/or alternatively synchronizes copies of application programs 1314 and/or application data 1316 to be stored at network-based server infrastructure 1370 as application programs 1376 and/or application data 1378. In examples, operating system 1312 and/or application programs 1314 include a file hosting service client configured to synchronize applications and/or data stored in storage 1320 at network-based server infrastructure 1370.

In some embodiments, on-premises servers 1392 are present in computing environment 1300 and are communicatively coupled with computing device 1302 via network 1304. On-premises servers 1392, when present, are hosted within an organization's infrastructure and, in many cases, physically onsite of a facility of that organization. On-premises servers 1392 are controlled, administered, and maintained by IT (Information Technology) personnel of the organization or an IT partner to the organization. Application data 1398 can be shared by on-premises servers 1392 between computing devices of the organization, including computing device 1302 (when part of an organization) through a local network of the organization, and/or through further networks accessible to the organization (including the Internet). Furthermore, in examples, on-premises servers 1392 serve applications such as application programs 1396 to the computing devices of the organization, including computing device 1302. Accordingly, in examples, on-premises servers 1392 include storage 1394 (which includes one or more physical storage devices such as storage disks and/or SSDs) for storage of application programs 1396 and application data 1398 and include a processor 1390 (e.g., similar to processor 1310, GPU 1342, and/or NPU 1344 of computing device 1302) for execution of application programs 1396. In some embodiments, multiple processors 1390 are present for execution of application programs 1396 and/or for other purposes. In further examples, computing device 1302 is configured to synchronize copies of application programs 1314 and/or application data 1316 for backup storage at on-premises servers 1392 as application programs 1396 and/or application data 1398.

Embodiments described herein may be implemented in one or more of computing device 1302, network-based server infrastructure 1370, and on-premises servers 1392. For example, in some embodiments, computing device 1302 is used to implement systems, clients, or devices, or components/subcomponents thereof, disclosed elsewhere herein. In other embodiments, a combination of computing device 1302, network-based server infrastructure 1370, and/or on-premises servers 1392 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1320. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1314) are stored in storage 1320. Such computer programs can also be received via wired interface(s) 1360 and/or wireless modem(s) 1360 over network 1304. Such computer programs, when executed or loaded by an application, enable computing device 1302 to implement features of embodiments discussed herein. Accordingly, such computer programs represent controllers of the computing device 1302.

Embodiments are also directed to computer program products comprising computer code or instructions stored on any computer-readable medium or computer-readable storage medium. Such computer program products include the physical storage of storage 1320 as well as further physical storage types.

### VIII. Additional Exemplary Embodiments

A search result improvement (SRI) system is described herein. The SRI system comprises a processor and a memory device. The memory device stores program code structured to cause the processor to: receive a first search query comprising a first search term, utilize a large language model (LLM) to generate a question based on the search term, identify data semantically similar to the question, utilize the LLM to determine an answer to the question based on the question and the identified data, and perform: generate a question-answer pair comprising the question and the answer, cause the answer to be presented in a graphic user interface of a search engine, and/or cause the answer to be presented in a graphic user interface of the search engine.

In a further implementation of the foregoing SRI system, the program code is executable by the processor circuit to further: store the question-answer pair in a question-answer pair database.

In a further implementation of the foregoing SRI system, the question-answer pair database is a key-value store comprising search terms stored as keys and question-answer pairs stored as values.

In a further implementation of the foregoing SRI system, the program code is executable by the processor circuit to further: provide the question-answer pair to a search engine responsive to the search engine receiving a second search query.

In a further implementation of the foregoing SRI system, the second search query comprises a second search term semantically similar to the first search term.

In a further implementation of the foregoing SRI system, to utilize the LLM to generate the question, the program code is executable by the processor circuit to further: determine additional context based on a domain of a search engine that received the first search query via user interaction; and generate a prompt to cause the LLM to generate the question, the prompt comprising the first search term and the additional context.

In a further implementation of the foregoing SRI system, the additional context comprises: a product associated with an organization corresponding to the domain; a subscription associated with the organization; or the organization.

In a further implementation of the foregoing SRI system, to utilize the LLM to generate the question, the program code is executable by the processor circuit to further: determine additional context based on a keyword included in the first search query; and generate a prompt to cause the LLM to generate the question, the prompt comprising the first search term and the additional context.

In a further implementation of the foregoing SRI system, the additional context comprises: a product corresponding to the keyword, an organization corresponding to the keyword, a service corresponding to the keyword.

In a further implementation of the foregoing SRI system, to utilize the LLM to generate the question, the program code is executable by the processor circuit to further: determine additional context based on a filter applied to the first search query; and generate a prompt to cause the LLM to generate the question, the prompt comprising the first search term and the additional context.

In a further implementation of the foregoing SRI system, the additional context comprises: a product corresponding to the filter, a subset of data corresponding to the filter, an organization corresponding to the filter.

In a further implementation of the foregoing SRI system, to utilize the LLM to generate the question, the program code is executable by the processor circuit to further: determine additional context based on a first webpage presented in a user interface of a computing device prior to navigation to a second webpage of the search engine; and generate a prompt to cause the LLM to generate the question, the prompt comprising the first search term and the additional context.

In a further implementation of the foregoing SRI system, to identify the data semantically similar to the question, the program code is executable by the processor circuit to further: determine a question embedding describing the question; and determine a similarity between the question embedding and a data embedding describing the data satisfies a similarity criterion.

In a further implementation of the foregoing SRI system, the first search query is received during an active session with a search engine and the program code is executable by the processor circuit to further: cause the question-answer pair to be presented in a graphic user interface of the search engine.

In a further implementation of the foregoing SRI system, wherein to receive the first search query, the program code is executable by the processor circuit to: obtain a set of search queries received by a search engine during a period of time, the set of search queries comprising the first search query.

A search engine system is described herein. The search engine system comprises a processor and a memory device. The memory device stores program code structured to cause the processor to: receive a search query comprising a search term, determine if a QA pair matches the search term. If there is a QA pair that matches the search term, cause an answer of the matching QA pair to be presented in a graphic user interface corresponding to the search engine system. If there is not a QA pair that matches the search term, cause a search engine to determine search results to be presented in the graphic user interface.

In a further implementation of the foregoing search engine system, if there is a QA pair that matches the search term, the program code is structured to cause the processor to cause the search engine to determine the search results.

In a further implementation of the foregoing search engine system, the program code is further structured to cause the processor circuit to: utilize a generative AI model to generate a question based on the search term.

In a further implementation of the foregoing search engine system, the program code is further structured to cause the processor circuit to: utilize an embedding model to generate a question embedding based on the question or a search term embedding based on the search term.

In a further implementation of the foregoing search engine system, the program code is further structured to cause the processor circuit to: determine if a QA pair matches the search term based on the question embedding or the search term embedding.

In a further implementation of the foregoing search engine system, the search engine system further comprises the search engine.

In a further implementation of the foregoing search engine system, the search engine system comprises the foregoing SRI system.

A system is described herein, the system comprising the foregoing SRI system.

In a further implementation of the foregoing system, the system comprises the foregoing search engine system.

In a further implementation of the foregoing system, further comprising an application comprising the graphic user interface.

A method is described herein. The method comprising: receiving a first search query executed during a first period of time, the first search query comprising a firsts search term; utilizing a large language model (LLM) to generate a question based on the first search query; identifying data semantically similar to the question; utilizing the LLM to determine an answer to the question based on the question and the identified data; and storing the question and answer as a question-answer pair in a data store.

In a further implementation of the foregoing method, the data store is a key-value store and said storing the question and the answer as a question-answer pair in a data store comprises: storing the first search term in the data store as a key; and storing the question-answer pair in the data store as a value corresponding to the key.

In a further implementation of the foregoing method, further comprising: causing the question-answer pair to be provided to a search engine subsequent to the search engine receiving a second search query.

In a further implementation of the foregoing method, wherein the second search query comprises a second search term semantically similar to the first search term.

In a further implementation of the foregoing method, wherein said utilizing the LLM to generate the question comprises: determining additional context based on a domain of a search engine that received the first search query via user interaction, a filter applied to the first search query, or a keyword included in the first search query; and generating a prompt to cause the LLM to generate the question, the prompt comprising the first search term and the additional context.

In a further implementation of the foregoing method, wherein the additional context comprises: a product associated with an organization corresponding to the domain; a subscription associated with the organization; the organization; a product corresponding to the filter; a subset of data corresponding to the filter; or a product corresponding to the keyword.

In a further implementation of the foregoing method, wherein said identifying the data semantically similar to the question comprises: determining a question embedding describing the question; and determining a similarity between the question embedding and a data embedding describing the data satisfies a similarity criterion.

A computer-readable storage medium is described herein. The computer-readable storage medium encoded with program instructions structured to cause a processor to perform any of the foregoing methods.

### IX. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Further still, example embodiments have been described with respect to LLMs; however, it is also contemplated herein that embodiments may utilize other types of generative AI models (e.g., a generative adversarial network (GAN), a multimodal model, and/or the like). For instance, an implementation of the described systems and/or methods may leverage a multimodal model that inputs and/or outputs more than one modality (e.g., text and images).

Moreover, according to the described embodiments and techniques, any components of systems, computing devices, servers, applications, embedding models, generative AI models, SRI systems, search engine systems, knowledge services, and/or their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

### The following is a list of further preferred embodiments of the invention:

Embodiment 1. A search result improvement system, comprising:
   a processor; and
   a memory device that stores program code structured to cause the processor to:
      receive a first search query comprising a first search term,
      determine a first additional context based on a domain of a search engine that received the first search query via user interaction,
      utilize a large language model (LLM) to generate a question based on the first search term and the first additional context,
      identify data semantically similar to the question,
      utilize the LLM to determine an answer to the question based on the question and the identified data,
      generate a question-answer pair comprising the question and the answer, and
      provide the question-answer pair to the search engine responsive to the search engine receiving a second search query, the second search query comprising a second search term semantically similar to the first search term.
Embodiment 2. The system of embodiment 1, wherein the program code is executable by the processor circuit to further:
   store the question-answer pair in a question-answer pair database.
Embodiment 3. The system of embodiment 2, wherein the question-answer pair database is a key-value store comprising search terms stored as keys and question-answer pairs stored as values.
Embodiment 4. The system of embodiment 1, wherein the first additional context comprises:
   a product associated with an organization corresponding to the domain;
   a subscription associated with the organization; or
   the organization.
Embodiment 5. The system of embodiment 1, wherein to utilize the LLM to generate the question, the program code is executable by the processor circuit to further:
   determine a second additional context based on a keyword included in the first search query; and
   generate a prompt to cause the LLM to generate the question, the prompt comprising the first search term, the first additional context, and the second additional context.
Embodiment 6. The system of embodiment 1, to identify the data semantically similar to the question, the program code is executable by the processor circuit to further:
   determine a question embedding describing the question; and
   determine a similarity between the question embedding and a data embedding describing the data satisfies a similarity criterion.
Embodiment 7. The system of embodiment 1, wherein the first search query is received during an active session with a search engine and the program code is executable by the processor circuit to further:
   cause the question-answer pair to be presented in a graphic user interface of the search engine.
Embodiment 8. The system of embodiment 1, wherein to receive the first search query, the program code is executable by the processor circuit to:
   obtain a set of search queries received by a search engine during a period of time, the set of search queries comprising the first search query.
Embodiment 9. A method, comprising:
   receiving a first search query executed during a period of time, the first search query comprising a firsts search term;
   utilizing a large language model (LLM) to generate a question based on the first search query;
   identifying data semantically similar to the question;
   utilizing the LLM to determine an answer to the question based on the question and the identified data; and
   storing the question and answer as a question-answer pair in a data store.
Embodiment 10. The method of embodiment 9, wherein the data store is a key-value store and said storing the question and the answer as a question-answer pair in a data store comprises:
   storing the first search term in the data store as a key; and
   storing the question-answer pair in the data store as a value corresponding to the key.
Embodiment 11. The method of embodiment 9, further comprising:
   causing the question-answer pair to be provided to a search engine subsequent to the search engine receiving a second search query.
Embodiment 12. The method of embodiment 11, wherein the second search query comprises a second search term semantically similar to the first search term.
Embodiment 13. The method of embodiment 9, wherein said utilizing the LLM to generate the question comprises:
   determining additional context based on a domain of a search engine that received the first search query via user interaction, a filter applied to the first search query, or a keyword included in the first search query; and
   generating a prompt to cause the LLM to generate the question, the prompt comprising the first search term and the additional context.
Embodiment 14. The method of embodiment 13, wherein the additional context comprises:
   a product associated with an organization corresponding to the domain;
   a subscription associated with the organization;
   the organization;
   a product corresponding to the filter;
   a subset of data corresponding to the filter; or
   a product corresponding to the keyword.
Embodiment 15. The method of embodiment 9, wherein said identifying the data semantically similar to the question comprises:
   determining a question embedding describing the question; and
   determining a similarity between the question embedding and a data embedding describing the data satisfies a similarity criterion.
Embodiment 16. The method of embodiment 9, wherein said receiving the first search query comprises:
   obtaining a set of search queries received by a search engine during the period of time, the set of search queries comprising the first search query.
Embodiment 17. A computer-readable storage medium encoded with program instructions structured to cause a processor to perform a method comprising:
   receiving a search query during an active session of a search engine, the search query comprising a search term;
   utilizing a large language model (LLM) to generate a question based on the search term;
   identifying data semantically similar to the question;
   utilizing the LLM to determine an answer to the question based on the question and the identified data; and
   causing the answer to be presented in a graphic user interface of the search engine.
Embodiment 18. The computer-readable storage medium of embodiment 17, wherein said utilizing the LLM to generate the question comprises:
   determining additional context based on a domain of the search engine, a keyword included in the search query, or a first webpage presented in a user interface of a computing device prior to navigation to a second webpage of the search engine; and generating a prompt to cause the LLM to generate the question, the prompt comprising the first search term and the additional context.
Embodiment 19. The computer-readable storage medium of embodiment 17, wherein said identifying the data semantically similar to the question comprises:
   determining a question embedding describing the question; and
   determining a similarity between the question embedding and a data embedding describing the data satisfies a similarity criterion.
Embodiment 20. The computer-readable storage medium of embodiment 17, wherein the method further comprises:
   failing to determine the search query matches a question-answer pair of a data store; and
   utilizing the LLM to generate the question subsequent to said filing to determine the search query matches a question-and-answer pair.

## Claims

1. A search result improvement system (100, 200, 700, 900, 1300), comprising:
a processor (1310, 1358, 1390); and
a memory device (1320, 1348, 1356, 1388, 1394) that stores program code (1314, 1376, 1396) structured to cause the processor (1310, 1358, 1390) to:
receive a first search query (210) comprising a first search term,
determine a first additional context based on a domain of a search engine (106) that received the first search query (210) via user interaction,
utilize a large language model (LLM) (130) to generate a question (214) based on the first search term and the first additional context,
identify data (220) semantically similar to the question (214),
utilize the LLM (130) to determine an answer (224) to the question (214) based on the question (214) and the identified data (220),
generate a question-answer pair (226) comprising the question (214) and the answer (224), and
provide the question-answer pair (226) to the search engine (106) responsive to the search engine (106) receiving a second search query (908), the second search query (908) comprising a second search term semantically similar to the first search term.

2. The system of claim 1, wherein the program code is executable by the processor circuit to further:
store the question-answer pair in a question-answer pair database.

3. The system of claim 2, wherein the question-answer pair database is a key-value store comprising search terms stored as keys and question-answer pairs stored as values.

4. The system of one of claims 1 to 3, wherein the first additional context comprises:
a product associated with an organization corresponding to the domain;
a subscription associated with the organization; or
the organization.

5. The system of one of claims 1 to 4, wherein to utilize the LLM to generate the question, the program code is executable by the processor circuit to further:
determine a second additional context based on a keyword included in the first search query; and
generate a prompt to cause the LLM to generate the question, the prompt comprising the first search term, the first additional context, and the second additional context.

6. The system of one of claims 1 to 5, to identify the data semantically similar to the question, the program code is executable by the processor circuit to further:
determine a question embedding describing the question; and
determine a similarity between the question embedding and a data embedding describing the data satisfies a similarity criterion.

7. The system of one of claims 1 to 6, wherein the first search query is received during an active session with a search engine and the program code is executable by the processor circuit to further:
cause the question-answer pair to be presented in a graphic user interface of the search engine.

8. The system of one of claims 1 to 7, wherein to receive the first search query, the program code is executable by the processor circuit to:
obtain a set of search queries received by a search engine during a period of time, the set of search queries comprising the first search query.

9. A method (300), comprising:
receiving a first search query executed during a period of time, the first search query comprising a firsts search term (302);
utilizing a large language model (LLM) to generate a question based on the first search query (304);
identifying data semantically similar to the question (306);
utilizing the LLM to determine an answer to the question based on the question and the identified data (308); and
storing the question and answer as a question-answer pair in a data store (310), and/or
wherein the data store is a key-value store and said storing the question and the answer as a question-answer pair in a data store comprises:
storing the first search term in the data store as a key; and
storing the question-answer pair in the data store as a value corresponding to the key.

10. The method of claim 9, further comprising:
causing the question-answer pair to be provided to a search engine subsequent to the search engine receiving a second search query, and/or
wherein the second search query comprises a second search term semantically similar to the first search term.

11. The method of claim 9 or 10, wherein said utilizing the LLM to generate the question comprises:
determining additional context based on a domain of a search engine that received the first search query via user interaction, a filter applied to the first search query, or a keyword included in the first search query; and
generating a prompt to cause the LLM to generate the question, the prompt comprising the first search term and the additional context.

12. The method of claim 11, wherein the additional context comprises:
a product associated with an organization corresponding to the domain;
a subscription associated with the organization;
the organization;
a product corresponding to the filter;
a subset of data corresponding to the filter; or
a product corresponding to the keyword.

13. The method of one of claims 9 to 12, wherein said identifying the data semantically similar to the question comprises:
determining a question embedding describing the question; and
determining a similarity between the question embedding and a data embedding describing the data satisfies a similarity criterion, or
wherein said receiving the first search query comprises:
obtaining a set of search queries received by a search engine during the period of time, the set of search queries comprising the first search query.

14. A computer-readable storage medium (1320) encoded with program instructions (1314) structured to cause a processor (1310) to perform a method (300) comprising:
receiving a search query during an active session of a search engine, the search query comprising a search term (302);
utilizing a large language model (LLM) to generate a question based on the search term (304);
identifying data semantically similar to the question (306);
utilizing the LLM to determine an answer to the question based on the question and the identified data (308); and
causing the answer to be presented in a graphic user interface of the search engine (310).

15. The computer-readable storage medium of claim 14, wherein said utilizing the LLM to generate the question comprises:
determining additional context based on a domain of the search engine, a keyword included in the search query, or a first webpage presented in a user interface of a computing device prior to navigation to a second webpage of the search engine; and
generating a prompt to cause the LLM to generate the question, the prompt comprising the first search term and the additional context, and/or
wherein said identifying the data semantically similar to the question comprises:
determining a question embedding describing the question; and
determining a similarity between the question embedding and a data embedding describing the data satisfies a similarity criterion, or
wherein the method further comprises:
failing to determine the search query matches a question-answer pair of a data store; and
utilizing the LLM to generate the question subsequent to said filing to determine the search query matches a question-and-answer pair.
